# EUROPÄISCHE PATENTSCHRIFT

(11) **EP 3 443 232 B1**
(45) Veröffentlichungstag und Bekanntmachung des Hinweises auf die Patenterteilung: **10.11.2021**
(21) Anmeldenummer: 17717625.2
(22) Anmeldetag: 05.04.2017
(51) Int. Cl.: F16B 2/24

(54) **CLIP ZUM BEFESTIGEN EINES ELEMENTS AN EINEM ANDEREN ELEMENT UND VERWENDUNG EINES SOLCHEN ZWEITEILIGEN CLIPS**
CLIP FOR SECURING AN ELEMENT TO ANOTHER ELEMENT AND USE OF A TWO-PART CLIP OF THIS TYPE
ATTACHE POUR LA FIXATION D'UN ÉLÉMENT SUR UN AUTRE ÉLÉMENT ET UTILISATION D'UNE ATTACHE EN DEUX PARTIES DE CE TYPE

(30) Priorität: 13.04.2016 DE 102016004336
(43) Veröffentlichungstag der Anmeldung: 20.02.2019
(73) Patentinhaber: A. Raymond et Cie. SCS, 38000 Grenoble (FR)
(72) Erfinder: BINKERT, Sven, 79540 Lörrach (DE); MASCHAT, Kevin, 79618 Rheinfelden (DE)
(74) Vertreter: Tilmann, Max Wilhelm
(86) Internationale Anmeldenummer: PCT/EP2017/000421
(87) Internationale Veröffentlichungsnummer: WO 2017/178098

(56) Entgegenhaltungen:
- WO-A1-2012/104250
- WO-A1-2012/150004
- DE-A1-102013 014 161

## Beschreibung

Die Erfindung betrifft einen Clip zum Befestigen eines Elements an einem anderen Element, insbesondere einen zweiteiligen Clip, und eine Vorrichtung mit einem ersten Element und einem zweiten, an dem ersten Element mittels eines Clips befestigten Element sowie die Verwendung eines Clips.

Einteilige Clips zum Befestigen eines ersten Elements an einem anderen Element sind aus dem Stand der Technik bekannt. WO 2012/104250 A1 beschreibt beispielsweise einen einteiligen Clip mit einem Kopf und einem sich von dem Kopf entlang einer Schaftachse fort erstreckenden Schaft mit einer Spitze. An dem Schaft des aus WO 2012/104250 A1 bekannten Clips sind insgesamt vier Vorsprünge vorgesehen, die jeweils eine dem Kopf zugewandte Kontaktfläche (Clipfläche) aufweisen. Die Vorsprünge sind in einer Richtung senkrecht zur Schaftachse federnd vorgespannt und durchgreifen Ausnehmungen, die an Seiten des Schafts vorgesehen sind. Der aus WO 2012/104250 A1 bekannte Clip weist als Teil des Kopfs vorgesehene, von einem Grundkörper des Kopf abstehende Arme auf. Im Endbereich des jeweiligen Arms ist jeweils eine Kontaktfläche des Kopfs vorgesehen, die den Vorsprüngen zugewandt ist. Wie aus Figur 5 der WO 2012/104250 A1 ersichtlich, befestigt der dort beschriebene einteilige Clip ein Anbauteil 30 in Gestalt einer Airbaganordnung als zweites Element an einem mechanisch hoch belastbaren Trägerteil 29 als erstes Element befestigt. Der aus WO 2012/104250 A1 bekannte Clip ist ein einstückiges Bauteil, das durch Umbiegen von Abschnitten eines Metallabschnitts erzeugt wird. Nachteilig bei dem aus WO 2012/104250 A1 bekannten Clip ist, dass das Metallelement eines der miteinander zu befestigenden Elemente beschädigt. Ferner ist der aus WO 2012/104250 A1 bekannte Clip nicht für Anwendungen geeignet, bei denen eines oder beide der miteinander zu befestigenden Elemente ein Loch aufweist, das von dem Clip durchgriffen wird, das jedoch gegen Flüssigkeitseintritt abgedichtet werden soll, beispielsweise wenn der Clip dazu verwendet wird, ein Paneel an einem Fahrzeugrahmen zu befestigen. Die DE 10 2013 014 161 A1 zeigt ferner einen Clip für das Halten von Leiterplatten, wobei der Schaft des Clips an der Seite des Kopfes von einem Ring aus einem nicht metallischen Material umgeben wird.

Vor diesem Hintergrund lag der Erfindung die Aufgabe zugrunde, einen Clip zum Befestigen eines ersten Elements an einem zweiten Element vorzuschlagen, bei dem das Risiko der Beschädigung eines der beiden miteinander zu verbindenden Elemente reduziert ist und/oder der eine Abdichtung eines Lochs in einem Element ermöglicht, das er durchgreift.

Diese Aufgabe wird durch den Gegenstand des Anspruchs 1 und 10 und die Vorrichtung gemäß Anspruch 14 sowie die Verwendung eines derartigen Gegenstands gemäß Anspruch 9 gelöst. Vorteilhafte Ausführungsformen sind in den Unteransprüchen und der hiernach folgenden Beschreibung wiedergegeben.

Die Erfindung geht gemäß einem ersten Aspekt von dem Grundgedanken aus, neben einem an sich bekannten einteiligen Clip ein weiteres Bauteil im Bereich des Kopfs eines solchen Clips vorzusehen, das eine Beschädigung der miteinander zu verbindenden Elemente verhindern kann und/oder eine Dichtwirkung herbeiführen kann und/oder weitere positive Effekte, wie beispielsweise das Erzeugen einer Vorspannkraft herbeiführen kann.

Hierzu sieht die Erfindung einen zweiteiligen Clip vor, der ein erstes Bauteil aufweist, das einen Kopf und einen sich von dem Kopf entlang einer Schaftachse fort erstreckenden Schaft mit einer Spitze aufweist, wobei mindestens ein Vorsprung an dem Schaft vorgesehen ist, der eine dem Kopf zugewandte Kontaktfläche aufweist, und der Kopf eine dem Vorsprung zugewandte Kontaktfläche aufweist. Der Vorsprung kann in Richtung senkrecht zur Schaftachse federnd vorgespannt sein. Der Vorsprung kann in Richtung senkrecht zur Schaftachse beweglich ausgeführt sein. Ferner sieht die Erfindung für den zweiteiligen Clip ein zweites Bauteil mit einer der Kontaktfläche des Kopfes zugewandten Stützfläche, auf der sich die Kontaktfläche des Kopfs abstützt, und einer dem Vorsprung zugewandten Kontaktfläche auf.

Es ist denkbar, dass das zweite Bauteil in Form eines Pads vorgesehen wird, das einer bestimmten Kontaktfläche des Kopfs zugeordnet ist. Beispielsweise ist es denkbar, dass der Kopf mehrere Kontaktflächen aufweist und das bei jeder Kontaktfläche ein Bauteil mit einer der jeweiligen Kontaktfläche des Kopfes zugewandten Stützfläche, auf der sich die jeweilige Kontaktfläche des Kopfes abstützt, vorgesehen ist, wobei das jeweilige Bauteil eine dem Vorsprung zugewandte Kontaktfläche aufweist.

Unter einem "Clip" zum Befestigen eines ersten Elements an einem zweiten Element wird eine Befestigungsvorrichtung verstanden, die zumindest eine erste Kontaktfläche und zumindest eine zweite, der ersten Kontaktfläche zugewandte Kontaktfläche aufweist. Die erste Kontaktfläche ist in der Regel an einem feststehenden Element der Befestigungsvorrichtung vorgesehen, während die zweite Kontaktfläche auf einem federnden Element der Befestigungsvorrichtung vorgesehen ist. Derartige Befestigungsvorrichtungen sind dazu vorgesehen, mit einer Spitze in eine Ausnehmung, meist ein Loch, in dem ersten Element eingeführt zu werden. Dabei wird das die zweite Kontaktfläche tragende federnde Element während des Einschiebens eingedrückt, federt jedoch nach dem Passieren der Ausnehmung wieder in seine Ausgangsstellung zurück. Das erste Element ist meist als flächiges Element, beispielsweise als Platte oder als Blech eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil des Lochs oberhalb der Hinterschneidung passiert hat. Das zweite Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls ein Loch aufweist und der Clip mit seiner Spitze durch beide Löcher geführt wird. Ebenso ist es denkbar, dass das zweite Element an einem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird. Dieses allgemeine Verständnis "Clip" wird für den ersten Aspekt der vorliegenden Erfindung zudem dadurch weiter konkretisiert, dass die oben genannte zweite Kontaktfläche hier die dem Kopf zugewandte Kontaktfläche des Vorsprungs an dem Schaft ist und die oben als erste Kontaktfläche bezeichnete Kontaktfläche die an dem zweiten Bauteil vorgesehene, dem Vorsprung zugewandte Kontaktfläche ist.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch ein Loch des ersten Elements geschoben werden kann. Häufig ist der Kopf auch dafür ausgebildet, um die für das Einschieben des Clips in ein Loch des ersten Elements aufzubringende Kraft auf den Clip applizieren zu können. Hierzu weist der Clip häufig eine der Spitze abgewandte flache Oberfläche auf. In einer bevorzugten Ausführungsform ist der Kopf starr ausgebildet, wobei unter "starr" verstanden wird, dass kein Abschnitt des Kopfes relativ zu einem anderen Kopf beweglich, beispielsweise federnd ausgebildet ist. In einer alternativen Ausführungsform weist der Kopf einen starren Grundkörper auf, an dem zum Kopf zugehörige federnde Elemente, beispielsweise federnde Arme oder schirmartige Dichtlippen vorgesehen sind. In einer bevorzugten Ausführungsform ist die größte Querschnittsfläche aller Querschnittsflächen des Kopfs in Ebenen senkrecht zur Längsachse des Clips größer als die größte Querschnittsfläche aller Querschnittsflächen des Schafts in Ebenen senkrecht zur Längsachse des Clips.

Der Clip weist ferner eine Spitze auf. Mit "Spitze" wird im Kontext dieser Beschreibung lediglich das dem Kopf gegenüberliegende Ende des Clips bezeichnet. Zwar ist es in einer bevorzugten Ausführungsform vorgesehen, dass ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüberliegenden Ende eines Schafts verstanden. In einer bevorzugten Ausführungsform kann die Spitze pyramidenförmig oder kegelförmig oder pyramidenstumpfförmig oder kegelstumpfförmig zulaufen. Ebenso kann die Spitze durch den First eines dachförmigen Endabschnitts eines sich von dem Kopf zur Spitze hin erstreckenden Schafts ausgebildet werden. Dies ist aber nicht zwingend notwendig. Die Spitze kann durch einen einzigen Abschnitt des Clips gebildet werden. In einer bevorzugten Ausführungsform wird die Spitze jedoch aus mehreren Teilabschnitten des Clips gebildet, beispielsweise durch die vier Scheitel der bogenförmigen Umbiegeabschnitte 15, wie sie in der WO 2012/104250 A2 gezeigt werden oder die beiden Scheitel der Bogenabschnitte der in Fig. 1, 2, 7, 8, 9, 10 der EP 2 404 067 B1 dargestellten Ausführungsformen.

Zwischen dem Kopf und der Spitze weist der Clip einen, ggf. aus mehreren Teilen zusammengesetzten Schaft auf. Der Clip weist eine Längsachse auf, die sich vom Kopf zu Spitze erstreckt. Insbesondere bevorzugt ist der Schaft in seiner vom Kopf zur Spitze weisenden Längserstreckung länger, als in einer senkrecht zur Längserstreckung weisenden Breitenrichtung. Insbesondere bevorzugt weist die Längsachse (die Schaftachse) des Clips in Richtung der Längserstreckung des Schafts. In einer bevorzugten Ausführungsform ist der Clip bezüglich einer Ebene, die die Längsachse des Clips enthält, spiegelsymmetrisch ausgeführt. In einer alternativen Ausführungsform ist der Clip in der Weise rotationssymmetrisch ausgeführt, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann.

Der erfindungsgemäße Clip weist einen Vorsprung an dem Schaft auf. Insbesondere bevorzugt hat der Vorsprung eine Ruheposition, in der er von einem Teilbereich des Schafts, beispielsweise einer Seite des Schafts, vorsteht und aus der der Vorsprung unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist der Vorsprung mit einem federnden Element verbunden oder Teil eines federnden Elements, so dass der Vorsprung unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element den Vorsprung drückt oder zieht. Insbesondere bevorzugt ist der Vorsprung in Richtung senkrecht zur Schaftachse (Längsachse) federnd vorgespannt. In einer bevorzugten Ausführungsform durchgreift das federnde Element einer Ausnehmung, die an einer Seite und/oder im Übergang von einer Seite zu einer sich von der Seite in Richtung auf eine gegenüberliege Seite erstreckenden Seitenwand vorgesehen ist. In einer bevorzugten Ausführungsform weist der Schaft einen zweiten Vorsprung auf, der ebenfalls eine dem Kopf zugewandte Kontaktfläche (Clipsfläche) aufweist. Insbesondere bevorzugt hat auch dieser zweite Vorsprung eine Ruheposition, in der er von einem Teilbereich des Schafts, beispielsweise einer Seite des Schafts, vorsteht und aus der er unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist der zweite Vorsprung mit einem federnden Element verbunden oder Teil eines federnden Elements, so dass der Vorsprung unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element den Vorsprung drückt oder zieht. Dieser zweite Vorsprung ist in einer besonders bevorzugten Ausführungsform an einer Seite des Schafts vorgesehen, die einer Seite gegenüber liegt, an der der erste Vorsprung vorgesehen ist. In einer besonders bevorzugten Ausführungsform sind insgesamt vier Vorsprünge vorgesehen, zwei an einer ersten Seite des Schafts und zwei an einer gegenüberliegenden Seite des Schafts, wobei alle vier Vorsprünge in Richtung senkrecht zur Schaftachse federnd, insbesondere bevorzugt nach außen federnd vorgespannt sind, bzw. jeweils mit federnden Elementen verbunden oder Teil federnder Elemente sind, so dass der jeweilige Vorsprung unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das jeweilige federnde Element keine Kraft ausübt. Die Ruheposition kann, muss aber nicht durch einen Anschlag definiert sein, gegen den das jeweilige federnde Element den jeweiligen Vorsprung drückt oder zieht.

In einer bevorzugten Ausführungsform weist das den Vorsprung aufweisende federnde Element eine Abschrägung auf. Die Abschrägung kann so ausgerichtet sein, dass sich die Abschrägung in Richtung auf die Sputze verjüngt. Dies ermöglicht es, dass das federnde Element beim Einschieben des Clips mit der Spitze in ein Lochs eines Elements mit dem das Loch begrenzenden Rand in Kontakt kommt und durch diesen Rand entgegen der Federvorspannung nach innen gedrückt wird.

In einer bevorzugten Ausführungsform weist das zweite Bauteil eine Öffnung auf, durch die der Schaft gesteckt ist. Dadurch wird erreicht, dass das zweite Bauteil eine gewisse Festlegung hinsichtlich seiner relativen Position zu dem ersten Bauteil erhält. Dies führt insbesondere auch zu einer Erleichterung der Ausrichtung des zweiten Bauteils relativ zum ersten Bauteil, wenn mittels des Clips die Befestigung des einen Elements an dem anderen Element hergestellt wird.

In einer bevorzugten Ausführungsform ist das zweite Bauteil auf dem Schaft lose zwischen einer ersten Position, bei der die Stützfläche an der Kontaktfläche des Kopfs anliegt, und einer zweiten Position beweglich. In der zweiten Position kann - in einer ersten Ausführungsform - eine Erhebung oder ein Vorsprung an dem zweiten Bauteil an den Rand einer Ausnehmung des ersten Bauteils, insbesondere in dem Schaft des ersten Bauteils stoßen. In einer zweiten, alternativen oder ergänzenden Ausführungsform kann das zweite Bauteil in der zweiten Position gegen eine Erhebung des Schafts stößt. Hierdurch kann eine Verliersicherung für das zweite Bauteil bewirkt werden. In die eine Richtung ist das zweite Bauteil in seiner Bewegung dadurch begrenzt, dass es mit seiner Stützfläche an der Kontaktfläche des Kopfes anliegt. In die andere Richtung ist es in seiner Bewegung dadurch begrenzt, dass seine Erhebung, bzw. sein Vorsprung gegen den Rand einer Ausnehmung in dem ersten Bauteil stößt und/oder es gegen einer Erhebung des Schafts stößt. Diese Erhebung des Schafts kann eine eigens zum Zwecke der Verliersicherung des zweiten Bauelements eingebrachte Erhebung, beispielsweise ein Noppen oder eine Rippe sein. Ebenso kann der ohnehin an dem Schaft vorgesehene Vorsprung die Erhebung bilden und die Erhebung des zweiten Bauteils in Richtung fort vom Kopf begrenzen. Eine Verliersicherung des zweiten Bauteils bietet die Möglichkeit, den zweiteiligen Clip bereits zusammengesetzt an Endkunden zu liefern. Diese können den Clip sofort einsetzen und müsse nicht noch in einem ersten Arbeitsschritt das zweite Bauteil auf den Schaft des ersten Bauteils schieben, wenn ein zweites Bauteil mit einer Öffnung vorgesehen ist, durch die der Schaft gesteckt ist.

In einer bevorzugten, alternativen Ausführungsform sind die Größe der Öffnung in dem zweiten Bauteil und der Querschnitt des Schafts in dem Bereich, in dem er durch die Öffnung gesteckt ist, so gewählt, dass eine Presspassung zwischen dem zweiten Bauteil und dem Schaft im Bereich der Öffnung des zweiten Bauteils entsteht. Eine solche Presspassung kann dazu beitragen, eine Dichtwirkung zu erzeugen. Eine Presspassung in diesem Bereich kann auch dadurch hergestellt werden, dass das zweite Bauteil als begrenzende Umrandung seiner Öffnung einen Dichtring, bzw. ein eine Dichtwirkung herstellendes elastisches Material aufweist.

Das zweite Bauteil weist eine Ausnehmung auf, die den Kopf aufnimmt, wodurch besondere Vorteile erreicht werden. Zum einen kann dadurch eine noch bessere Positionierung des zweiten Bauteils relativ zum ersten Bauteil bewirkt werden. Ferner kann das Aufnehmen von zumindest Teilen des Kopfes in einer Ausnehmung des zweiten Bauteils dazu führen, dass Kanten oder scharfe Vorsprünge an dem Kopf abgedeckt werden und somit nicht mehr zu einer Schädigung der mit dem Clip zu verbindenden Elemente führen können. Die Ausnehmung kann in ihrer dreidimensionalen Form deutlich größer gewählt werden, als die dreidimensionale Form des Teil des Kopfes, den die Ausnehmung aufnehmen soll. Bereits hierdurch kann eine Schutzwirkung gegen Beschädigung der miteinander zu verbindenden Elemente erreicht werden. In einer bevorzugten Ausführungsform entspricht die dreidimensionale Form der Ausnehmung der dreidimensionalen Form des Teil des Kopfes, den sie aufnehmen soll; Die Ausnehmung ist vorzugsweise zumindest hinsichtlich seiner Außenkontur das Negativ des Teils des Kopfes, den sie aufnehmen soll. Hierdurch wird die Lage des Kopfes relativ zum zweiten Bauteil eindeutig definiert. Ferner kann eine derartige Ausführungsform dem Abdichten beitragen. Zum Fixieren des Kopfs kann es ausreichen, wenn die Ausnehmung hinsichtlich ihrer Außenkonturen das Negativ des von ihr aufgenommenen Kopfs ist. Der Kopf kann Hinterschneidungen oder Ausnehmungen aufweisen. Die können zwar in einer bevorzugten Ausführungsform bei der Formgebung der Ausnehmung aufgegriffen werden und als Negativ nachgebildet werden. Es reicht jedoch für das erreichen eines positiven, den Kopf sichernden Effekts aus, wenn nur die Außenkontur der Ausnehmung der Außenkontur (die Einhüllende/die Envelope) des Kopfs nachgebildet ist.

In einer bevorzugten Ausführungsform ist die Ausnehmung so tief ausgebildet, dass wenn sich die Kontaktfläche des Kopfes auf der Stützfläche des zweiten Bauteils abstützt, der Kopf nicht aus der Ausnehmung herausragt. In einer bevorzugten Ausführungsform ist die Stützfläche des zweiten Bauteils der Grund der Ausnehmung. Diese Ausführungsform bewirkt, dass der Kopf gänzlich in dem zweiten Bauteil verschwindet und nur noch von oben zugänglich ist. Hierdurch wird ein besonders guter Schutz der mit dem Clip zu verbindenden Bauteile erreicht.

In einer bevorzugten Ausführungsform, in der das zweite Bauteil eine Ausnehmung aufweist, die den Kopf aufnimmt, und bei der das zweite Bauteil eine Öffnung aufweist, durch die der Schaft gesteckt ist, erstreckt sich die Öffnung des zweiten Bauteils von dem Grund der Ausnehmung fort.

In einer bevorzugten Ausführungsform haben die Ausnehmungen und der Kopf einen rechteckigen Querschnitt. Hierdurch kann eine Rotation des Kopfes relativ zum zweiten Bauteil verhindert werden. In einer alternativen Ausführungsform können die Ausnehmungen und der Kopf einen kreisförmigen, einen elliptischen, einen dreieckigen oder mehreckigen Querschnitt haben, wobei der Querschnitt der Ausnehmung in einer bevorzugten Ausführungsform dem Querschnitt des Kopfes entspricht, damit die Ausnehmung den Kopf in einer bevorzugten Ausführungsform ohne Spiel aufnehmen kann.

In einer bevorzugten Ausführungsform sind das erste Bauteil und das zweite Bauteil aus unterschiedlichen Materialien hergestellt. In einer besonders bevorzugten Ausführungsform ist das erste Bauteil aus Metall, während das zweite Bauteil nicht aus Metall hergestellt ist, wobei das zweite Bauteil insbesondere bevorzugt aus Kunststoff hergestellt ist. Durch diese Ausführungsform können das erste Bauteil und das zweite Bauteil verschiedene Funktionen übernehmen. Das aus Metall hergestellte erste Bauteil führt zu einer besonders hohen Steifigkeit des zweiteiligen Clips. Das Ausführen des zweiten Bauteils nicht aus Metall kann dazu genutzt werden, mit dem zweiten Bauteil dämpfende, dichtende oder die zu verbindenden Elemente schützende Funktionen zu übernehmen. In einer alternativen Ausführungsform sind das erste Bauteil und das zweite Bauteil aus dem gleichen Material, insbesondere bevorzugt aus Metall oder insbesondere bevorzugt aus Kunststoff hergestellt.

Ist das zweite Bauteil aus einem elastischeren Material hergestellt, als das erste Bauteil und insbesondere bevorzugt auch aus einem elastischeren Material als das Material, das für die beiden zu verbindenden Elemente verwendet wird, so kann das Vorsehen des zweiten Bauteils auch als Toleranzausgleich für Fertigungstoleranzen verwendet werden. Wird der Abstand zwischen der dem Kopf zugewandten Kontaktfläche des Vorsprungs und der dem Vorsprung zugewandten Kontaktfläche des zweiten Bauteils kleiner gewählt, als die Gesamtdicke des ersten Elements und des zweiten Elements, wenn diese durch den erfindungsgemäßen Clip dadurch mit einander befestigt werden sollen, dass sie zwischen diesen beiden Kontaktflächen angeordnet werden, so wird das zweite Bauteil beim Erzeugen der Befestigung zusammengedrückt und kann somit Fertigungstoleranzen kompensieren. Eine solche Ausführungsform kann auch dazu verwendet werden, den Kopfs des ersten Bauelements starr und ohne an dem Kopf vorgesehenen elastische Arme auszubilden, wie diese aus WO 2012/104250 A1 bekannt sind. Die Aufgabe der federnden Arme eines Kopfes hinsichtlich des Erzeugens einer Anpresskraft, mit der die beiden miteinander zu verbindenden Elemente einander gepresst werden, kann bei dem erfindungsgemäßen Clip auch durch einen entsprechend elastisch ausgestaltetes zweites Bauteil erreicht werden. Eine Anpresskraft kann dazu genutzt werden, eine Vorspannung im Einbauzustand zu erzeugen. Dies kann zu einer Verhinderung von Bewegung, bzw. Geräuschen durch äußere Anregung wie Vibrationen, Schwingungen, Relativbewegungen führen.

In einer bevorzugten Ausführungsform ist das erste Bauteil durch Biegen aus einem Metallzuschnitt hergestellt. Es hat sich gezeigt, dass eine derartige Herstellungsmethode für das Erzeugen eines Clips aus Metall besonders geeignet ist.

In einer bevorzugten Ausführungsform ist die dem Vorsprung zugewandte Kontaktfläche des zweiten Bauteils eine ringförmig die Schaftachse umlaufende Kontaktfläche. Der Ring kann sowohl kreisringförmig sein, als auch andere Ringformen aufweisen, wie beispielsweise die eines elliptischen Rings oder die eines dreieckigen oder rechteckigen oder polygonen Rings. Das Ausbilden der dem Vorsprung zugewandten Kontaktfläche des zweiten Bauteils als Ring kann insbesondere bevorzugt zu Dichtzwecken verwendet werden. Die dem Vorsprung zugewandte Kontaktfläche des zweiten Bauteils ist in der Regel die Kontaktfläche, die mit einem der beiden zu verbindenden Elemente in Kontakt kommt, wenn die beiden zu verbindenden Elemente dadurch miteinander verbunden werden, dass sie zwischen die dem Vorsprung zugewandte Kontaktfläche des zweiten Bauteils und die an dem Vorsprung des ersten Bauteils vorgesehene Kontaktfläche verbracht werden. Sind in einer besonders bevorzugten Ausführungsform beide zu verbindenden Elemente mit einem Loch ausgestattet, durch dass der Schaft des ersten Bauteils des zweiteiligen Clips geführt wird, so kann eine ringförmige Kontaktfläche an dem zweiten Bauteil zum Abdichten genutzt werden, wenn sie die Öffnung in dem einen der beiden zu verbindenden Elemente umgibt. Das Vorsehen einer ringförmigen Kontaktfläche kann auch dazu dienen, eine gleichmäßige Anpresskraft auf die miteinander zu verbindenden Elemente aufzubringen.

Es ist jedoch nicht zwingend notwendig, dass die dem Vorsprung zugewandte Kontaktfläche des zweiten Bauteils eine ringförmig um die Schaftachse umlaufende Kontaktfläche ist. Die Kontaktfläche kann auch eine einzelne in sich geschlossene Fläche sein. Es ist auch denkbar, dass das zweite Bauteil mehrere Kontaktflächen, insbesondere mehrere in sich geschlossene Kontaktflächen aufweist, die den Vorsprung, bzw. den Vorsprüngen zugewandt sind.

In einer bevorzugten Ausführungsform weist das zweite Bauteil einen oberen Teil auf, der eine Ausnehmung zur Aufnahme des Kopfes aufweist, und einen unteren Teil. Insbesondere bevorzugt sind der obere Teil und der untere Teil Teile eines einstücken Elements. Insbesondere bevorzugt werden der obere Teil und der untere Teil durch eine Trennwand voneinander getrennt, wobei die Trennwand den Grund der Ausnehmung bildet und die der Kontaktfläche des Kopfes zugewandte Stützfläche aufweist. In einer bevorzugten Ausführungsform weist auch der untere Teil eine Ausnehmung auf, deren Grund die Trennwand zum oberen Teil ist. Die Ausnehmung des unteren Teils und die Ausnehmung des oberen Teils öffnen sich somit in einer bevorzugten Ausführungsform in unterschiedliche Richtungen.

In einer bevorzugten Ausführungsform ist der untere Teil in seiner Erstreckung von der Trennwand fort schirmförmig ausgebildet. In einer bevorzugten Ausführungsform weist der obere Teil einen rechteckigen Querschnitt auf, wobei der rechteckige Querschnitt auch abgerundete Ecken beinhalten kann. In einer bevorzugten Ausführungsform setzt ein schirmförmiger unterer Teil den rechteckigen Querschnitt des oberen Teils derart fort, dass jeder Querschnitt des unteren Teils ebenfalls einen rechteckigen Außenumfang hat, bzw. einen Außenumfang hat, der in seiner geometrischen Form, wenn auch nicht in seiner Größe den Außenumfang des oberen Teils entspricht, während die Größe unter Beibehaltung der geometrischen Form des Außenumfang des Querschnitts des unteren Teils vor jeder Schnittebene zur nächsten Schnittebene, die weiter entfernt von dem oberen Teil liegt, zunimmt.

In einer bevorzugten Ausführungsform weist ein schirmförmig ausgebildeter unterer Teil des zweiten Bauteils Verstärkungsrippen auf. Diese Verstärkungsrippen können beispielsweise aus einem anderen Material als das übrige Material des unteren Teils des zweiten Bauteils sein oder sich von den übrigen Teilen des unteren Teils des zweiten Bauteils in ihrer Materialstärke unterscheiden.

Im Rahmen dieser Beschreibung wird eine Fläche als einer anderen Fläche zugewandt verstanden, wenn die Flächennormale der einen Fläche die Ebene, in der sich die andere Fläche befindet schneidet. Dass die eine Fläche der anderen Fläche zugewandt ist, erfordert im Zuge der Beschreibung der vorliegenden Erfindung nicht, dass die eine Fläche durch eine Bewegung entlang ihrer Flächennormale in Deckung oder in Überlappung mit der Fläche gebracht werden kann, der sie zugewandt ist. Um als einander zugewandte Flächen zu gelten, reicht es im Zuge dieser Beschreibung beispielsweise aus, dass die an dem zweiten Bauteil vorgesehene, dem Vorsprung zugewandte Kontaktfläche in einer Ebene senkrecht zur Längsachse (Schaftachse) des Schafts angeordnet ist und in Richtung auf die Spitze weist, während die an dem Vorsprung des Schafts vorgesehene, dem Kopf zugewandte Kontaktfläche ebenfalls in einer Ebene angeordnet ist, die senkrecht zur Längsachse (Schaftachse) steht und dem Kopf zugewandt ist, ohne dass die eine Fläche der anderen Fläche gegenüberliegend angeordnet sein muss. In einer bevorzugten Ausführungsform sind die einander zugewandten Flächen in parallelen Ebenen angeordnet.

In einer bevorzugten Ausführungsform weist der Kopf mehrere dem Vorsprung zugewandte Kontaktflächen auf und das zweite Bauteil mehrere Stützflächen auf, wobei jeweils eine Stützfläche einer Kontaktfläche des Kopfes zugewandt ist und sich jeweils eine Kontaktfläche des Kopfes auf einer Stützfläche des zweiten Bauteils abstützt. Dabei sind auch Ausführungsformen denkbar, bei denen die Stützfläche des zweiten Bauteils größer gewählt ist, als die Kontaktfläche des Kopfes und sich beispielsweise zwei Kontaktflächen des Kopfes auf einer Stützfläche des zweiten Bauteils abstützen.

In einer bevorzugten Ausführungsform weist das zweite Bauteil mehrere dem Vorsprung zugewandte Kontaktflächen auf. Insbesondere bevorzugt ist zumindest eine dem Vorsprung zugewandte Kontaktfläche auf einer Seite einer Ebene angeordnet, die die Schaftachse enthält und eine andere dem Vorsprung zugewandte Kontaktfläche auf der anderen Seite dieser Ebene.

In einer bevorzugten Ausführungsform sind alle Kontaktflächen des Kopfes in einer Ebene angeordnet.

In einer bevorzugten Ausführungsform sind alle Kontaktflächen des zweiten Bauteils in einer Ebene angeordnet.

In einer bevorzugten Ausführungsform sind alle Stützflächen des zweiten Bauteils in einer Ebene angeordnet.

In einer bevorzugten Ausführungsform ist eine dem Vorsprung zugewandte Kontaktfläche des zweiten Bauteils an einem Vorsprung ausgebildet, der von einem Grundkörper, beispielsweise einem oberen Teil des zweiten Bauteils, der eine Ausnehmung zur Aufnahme des Kopfes aufweist, vorsteht. Der Vorsprung kann aus Vollmaterial sein. Ebenso kann der Vorsprung stegförmig oder brückenförmig ausgebildet sein oder zwei Schenkel aufweisen, die sich in einer Spitze treffen, an der die dem Vorsprung zugewandte Kontaktfläche des zweiten Bauteils vorgesehen ist.

In dem Kopf können Ausnehmungen vorgesehen sein und der übrige Aufbau des Clips so gewählt sein, dass ein Werkzeug, beispielsweise ein Schraubenzieher oder ein Spitz von oben durch den Kopf hindurch zu einem federnden Element geführt werden kann, an dem der Vorsprung ausgebildet ist, wobei die Öffnung in dem Kopf so groß gewählt ist, dass sie eine Bewegung des Werkzeugs zulässt, um das federnde Element entgegen seiner nach außen gerichteten Vorspannung zurückzuziehen, um somit den Vorsprung an dem Schaft in Richtung auf die Schaftmitte hin zurückzuziehen.

Das zweite Bauteil kann aus zwei Teilen bestehen, einem ersten Teil, der die der Kontaktfläche des Kopfes zugewandte Stützfläche aufweist, auf der sich die Kontaktfläche des Kopfes abstützt, und einem zweiten Teil, der die dem Vorsprung zugewandte Kontaktfläche aufweist. In einer bevorzugten Ausführungsform ist das erste Teil des zweiten Bauteils federnd mit dem zweiten Teil des zweiten Bauteils verbunden. In einer besonders bevorzugten Ausführungsform weist der erste Teil des zweiten Bauteils eine Öffnung auf, durch die der Schaft gesteckt ist, und/oder der zweite Teil des zweiten Bauteils eine Öffnung auf, durch der Schaft gesteckt ist. In einer bevorzugten Ausführungsform weisen beide Teile jeweils eine Öffnung auf, durch der Schaft gesteckt ist, wobei das erste Teil des zweiten Bauteils an einer seiner Seiten einen umgebogenen Abschnitt aufweist, der mit einer Seite des zweiten Teils des zweiten Bauteils verbunden ist, wobei dieser umgebogene Abschnitt die federnde Verbindung zwischen den beiden Teilen herstellt. In einer bevorzugten Ausführungsform sind der erste Teil und der zweite Teil des zweiten Bauteils aus Metall oder aus Kunststoff hergestellt.

Gemäß einer bevorzugten Ausführungsform hat der Clip zum Befestigen eines ersten Elements an einem zweiten Element vorgeschlagen,
- einen Kopf und eine Spitze und
- eine erste Seite und eine zweite Seite aufweist, wobei sich die erste Seite vom dem Kopf in Richtung auf die Spitze erstreckt und die zweite Seite sich von dem Kopf in Richtung auf die Spitze erstreckt,
- wobei sich eine erste Seitenwand von der ersten Seite in

Richtung auf die zweite Seite erstreckt,
wobei der Kopf eine Seitenfläche aufweist und eine der Spitze zugewandte Kontaktfläche und
die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht.

In einer besonders bevorzugten Ausführungsform ist bei dem vorstehend beschriebenen ersten Aspekt der Erfindung das erste Bauteil so ausgeführt, dass das erste Bauteil
- einen Kopf und eine Spitze und
- eine erste Seite und eine zweite Seite aufweist, wobei sich die erste Seite vom dem Kopf in Richtung auf die Spitze erstreckt und die zweite Seite sich von dem Kopf in Richtung auf die Spitze erstreckt,
- wobei sich eine erste Seitenwand von der ersten Seite in Richtung auf die zweite Seite erstreckt,
wobei der Kopf eine Seitenfläche aufweist und eine der Spitze zugewandte Kontaktfläche und
die Seitenfläche des Kopfes über eine gerundete Kante in die der Spitze zugewandte Kontaktfläche des Kopfes übergeht, und/oder
die erste Seite über eine gerundete Kante in die erste Seitenwand übergeht.

Durch den Einsatz der gerundeten Kanten werden Spitzen, Rücksprünge oder Kanten in diesen Bereichen vermieden, die zur Beschädigung der zu verbindenden Elemente führen können. Insbesondere in der Ausführungsform, in der die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht, kann das Verletzungsrisiko der beiden zu verbindenden Elemente stark reduziert werden.

In einer bevorzugten Ausführungsform ist die Seitenfläche des Kopfes fluchtend mit der ersten Seite.

In einer bevorzugten Ausführungsform erstreckt sich die gerundete Kante, über die die erste Seite in die erste Seitenwand übergeht in eine Richtung parallel zur Längsachse (Schaftachse) des Clips, während die gerundete Kante, mit der die Seitenfläche des Kopfes in die der Spitze zugewandte Kontaktfläche des Kopfes übergeht sich in eine Richtung erstreckt, die sich in einem Winkel, insbesondere bevorzugt senkrecht zu der Richtung ist, in der sich die gerundete Kante erstreckt, mit der die erste Seite in die erste Seitenwand übergeht. Die gerundete Kante ist insbesondere bevorzugt in einem Querschnitt senkrecht zu der Linie, in die sich die Kante erstreckt, bogenförmig ausgeführt.

Insbesondere bevorzugt ist der Bogenabschnitt, mit dem die erste gerundete Kante in die zweite gerundete Kante übergeht nach Art einer Kehle ausgeführt.

In einer bevorzugten Ausführungsform geht die der Spitze zugewandte Kontaktfläche des Kopfes über einen Bogenabschnitt in die erste Seitenwand über.

In einer bevorzugten Ausführungsform weist der Clip, bzw. das erste Bauteil eine erste Seite auf, die sich von dem Kopf in Richtung auf die Spitze erstreckt. Der Clip weist einen, ggf. auch aus mehreren Elementen des Clips gebildeten Schaft auf. Dieser Schaft weist in einer bevorzugten Ausführungsform eine erste Seite auf, die sich von dem Kopf in Richtung auf die Spitze erstreckt. Ebenso weist dieser Schaft eine zweite Seite auf, die sich von dem Kopf in Richtung auf die Spitze erstreckt. In einer besonders bevorzugten Ausführungsform erstreckt sich die erste Seite von dem Kopf bis zu der Spitze, wobei sich an dem spitzenseitigen Ende der ersten Seite Abschnitte des Clips anschließen, die zur Bildung der Spitze beitragen. In einer besonders bevorzugten Ausführungsform erstreckt sich die zweite Seite von dem Kopf bis zu der Spitze, wobei sich an dem spitzenseitigen Ende der zweiten Seite Abschnitte des Clips anschließen, die zur Bildung der Spitze beitragen. Es sind aber auch Bauformen denkbar, bei denen der Schaft des Clips zwar ausgehend vom Kopf mit einer ersten Seite und einer zweiten Seite beginnt, die sich jeweils in Richtung auf dem Kopf erstrecken, dann aber zwischen der ersten Seite und den die Spitze bildenden Abschnitten des Clips andere, insbesondere im Verhältnis zu der Erstreckung der ersten Seite in andere Richtungen weisende Abschnitte des Clips vorgesehen sind, und/oder dann aber zwischen der zweiten Seite und den die Spitze bildenden Abschnitten des Clips andere, insbesondere im Verhältnis zu der Erstreckung der zweiten Seite in andere Richtungen weisende Abschnitte des Clips vorgesehen sind.

In einer bevorzugten Ausführungsform sind die erste Seitenwand und die zweite Seitenwand fluchtend ausgerichtet. Unter fluchtend wird insbesondere bevorzugt verstanden, dass die erste Seitenwand eine nach außen weisende Oberfläche aufweist und die zweite Seitenwand eine nach außen weisende Oberfläche aufweist und dass die nach außen weisende Oberfläche der ersten Seitenwand und die nach außen weisende Oberfläche der zweiten Seitenwand in einer Ebene angeordnet sind. In einer bevorzugten Ausführungsform sind die erste Seitenwand und die zweite Seitenwand auf derselben Seite einer Ebene angeordnet, die die Längsachse des Clips enthält.

Der erfindungsgemäße Clip weist in einer bevorzugten Ausführungsform eine erste Seitenwand auf, die sich von der ersten Seite in Richtung auf die zweite Seite erstreckt. In einer besonders bevorzugten Ausführungsform weist der Clip eine dritte Seitenwand auf, die sich ebenfalls von der ersten Seite in Richtung auf die zweite Seite erstreckt, wobei sich die erste Seitenwand von einem ersten Rand der ersten Seite in Richtung auf die zweite Seite erstreckt und die dritte Seitenwand sich von einem dem ersten Rand gegenüberliegenden zweiten Rand der ersten Seite in Richtung auf die zweite Seite erstreckt. In einer besonders bevorzugten Ausführungsform weist der Clip eine vierte Seitenwand auf, die sich ebenfalls von der zweiten Seite in Richtung auf die erste Seite erstreckt, wobei sich die zweite Seitenwand von einem ersten Rand der zweiten Seite in Richtung auf die erste Seite erstreckt und die vierte Seitenwand sich von einem dem ersten Rand gegenüberliegenden zweiten Rand der zweiten Seite in Richtung auf die erste Seite erstreckt. In einer bevorzugten Ausführungsform sind die dritte Seitenwand und die vierte Seitenwand fluchtend ausgerichtet. Unter fluchtend wird insbesondere bevorzugt verstanden, dass die dritte Seitenwand eine nach außen weisende Oberfläche aufweist und die vierte Seitenwand eine nach außen weisende Oberfläche aufweist und dass die nach außen weisende Oberfläche der dritten Seitenwand und die nach außen weisende Oberfläche der vierte Seitenwand in einer Ebene angeordnet sind. In einer bevorzugten Ausführungsform ist die erste Seitenwand parallel zur dritten Seitenwand ausgeführt und/oder die zweite Seitenwand parallel zur vierten Seitenwand ausgeführt

Wie vorstehend ausgeführt, kann der Clip spiegelsymmetrisch bezüglich einer Ebene ausgeführt sein, die die Längsachse des Clips enthält. In einer solchen Ausführungsform ist die dritte Seitenwand so ausgeführt, wie die erste Seitenwand, und die vierte Seitenwand so ausgeführt, wie die zweite Seitenwand, so dass die nachfolgenden Erläuterungen von Merkmalen der ersten Seitenwand auch Erläuterungen von Merkmalen der dritten Seitenwand sind und die nachfolgenden Erläuterungen von Merkmalen der zweiten Seitenwand auch Erläuterungen von Merkmalen der vierten Seitenwand sind. Wie vorstehend ausgeführt, kann der Clip aber auch in der Weise rotationssymmetrisch ausgeführt sein, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann. In einer solchen Ausführungsform ist die dritte Seitenwand so ausgeführt, wie die zweite Seitenwand, und die vierte Seitenwand so ausgeführt, wie die erste Seitenwand, so dass die nachfolgenden Erläuterungen von Merkmalen der ersten Seitenwand auch Erläuterungen von Merkmalen der vierten Seitenwand sind und die nachfolgenden Erläuterungen von Merkmalen der zweiten Seitenwand auch Erläuterungen von Merkmalen der dritten Seitenwand sind.

In der Beschreibung wird als Inneres des Clips der unmittelbare Bereich um die Längsachse (Schaftachse) des Clips verstanden und/oder - soweit vorhanden - der von der ersten Seite, der zweiten Seite und der ersten Seitenwand und der zweiten Seitenwand und - soweit vorhanden - der von der dritten Seitenwand und der vierten Seitenwand eingeschlossene Raum. Soweit in dieser Beschreibung von nach außen weisenden Oberflächen gesprochen wird oder in sonstiger Weise der Begriff "nach außen" verwendet wird, so ist damit eine Richtung gemeint, die von der Längsachse des Clips fortweist.

In einer bevorzugten Ausführungsform weist bei dem Clip die erste Seitenwand einen ersten vorstehenden Finger auf, der über einen Bereich der zweiten Seitenwand überlappt und einen zweiten vorstehenden Finger, der über einen anderen Bereich der zweiten Seitenwand überlappt. Im Kontext dieser Beschreibung überlappt ein Finger über einen Bereich einer Seitenwand, wenn zumindest ein Teil des Fingers so angeordnet ist, dass er eine Flächennormale einer Oberfläche dieses Bereichs schneidet und/oder eine Linie senkrecht zu einer Längsachse des Fingers den Bereich der Seitenwand schneidet. Es ist für den Erfolg der Erfindung nicht zwingend notwendig, dass sich eine Oberfläche des Fingers in Kontakt mit einer Oberfläche des Bereichs der Seitenwand befindet, mit der der Finger überlappt. In einer bevorzugten Ausführungsform steht jedoch eine Oberfläche des Fingers mit der Oberfläche des Bereichs der Seitenwand, mit der er überlappt, im Kontakt.

In einer bevorzugten Ausführungsform ist die Länge des Fingers größer als die Breite des Fingers, wobei als Länge die Richtung der Erstreckung des Fingers von der ersten Seitenwand in Richtung auf die zweite Seitenwand verstanden wird. Neben der senkrecht zur Länge stehenden Breite weist der Finger insbesondere bevorzugt eine Höhe auf, die in der Regel durch die Materialstärke vorgegeben ist und auch als Dicke bezeichnet werden kann. In einer bevorzugten Ausführungsform ist die Breite des Fingers größer als die Höhe (Dicke) des Fingers. In einer bevorzugten Ausführungsform erstreckt sich die Breitenrichtung des Fingers parallel zur Längsachse des Clips und/oder die Längsrichtung des Fingers senkrecht zur Längsachse oder senkrecht zu einer Linie, die parallel zur Längsachse verläuft.

In einer bevorzugten Ausführungsform weist die erste Seitenwand einen Grundkörper auf, von dem der erste vorstehende Finger vorsteht, bzw. der zweite vorstehende Finger vorsteht. Der Grundkörper weist insbesondere bevorzugt eine Länge auf, wobei unter der Länge insbesondere die Erstreckung des Grundkörpers von der ersten Seite in Richtung auf die zweite Seite verstanden wird. In einer bevorzugten Ausführungsform geht die erste Seite über eine Kante in die erste Seitenwand über. Als Länge wird dann insbesondere die maximale Erstreckung des Grundkörpers von dieser Kante in Richtung auf die zweite Seite verstanden. Ergänzend oder alternativ erstreckt sich die Längenrichtung des Grundkörpers senkrecht zur Längsachse des Clips, bzw. senkrecht zu einer Linie, die parallel zur Längsachse des Clips verläuft. Der Grundkörper hat insbesondere bevorzugt auch eine Breite, die sich insbesondere bevorzugt in eine Richtung parallel zur Längsachse des Clips erstreckt. Der Grundkörper hat ferner eine Höhe, die auch als Dicke bezeichnet werden kann und meist durch die Materialstärke vorgegeben ist. In einer bevorzugten Ausführungsform ist die Breite des Grundkörpers größer als die Länge des Grundkörpers.

In einer bevorzugten Ausführungsform ist die Breite des ersten vorstehenden Fingers und/oder die Breite des zweiten vorstehenden Fingers kleiner als die Breite des Grundkörpers. In einer bevorzugten Ausführungsform ist die Breite eines vorstehenden Fingers kleiner als die Hälfte der Breite des Grundkörpers, insbesondere bevorzugt kleiner als ein Drittel, insbesondere bevorzugt kleiner als ein Viertel der Breite des Grundkörpers.

In einer bevorzugten Ausführungsform ist die Breite des ersten vorstehenden Fingers gleich der Breite des zweiten vorstehenden Fingers. In einer bevorzugten Ausführungsform ist der Abstand des Endes des ersten vorstehenden Fingers zu der zweiten Seite gleich dem Abstand des zweiten vorstehenden Fingers zu der zweiten Seite.

In einer bevorzugten Ausführungsform ist die Breite des Grundkörpers der ersten Seitenwand und/oder die Breite des Grundkörpers der zweiten Seitenwand größer als 40 %, insbesondere bevorzugt größer als 50 %, insbesondere größer als 60 %, insbesondere bevorzugt größer als 70 % und insbesondere bevorzugt größer als 80 % der Erstreckung des Schafts des Clips ist.

In einer bevorzugten Ausführungsform ist die Länge des vorstehenden Fingers kleiner als die maximale Länge des Grundkörpers. In einer alternativen Ausführungsform ist die Länge des vorstehenden Fingers gleich der maximalen Länge des Grundkörpers.

In einer alternativen Ausführungsform ist die Länge des vorstehenden Fingers größer als die maximale Länge des Grundkörpers.

In einer bevorzugten Ausführungsform geht die erste Seite über eine Kante in die erste Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. In einer bevorzugten Ausführungsform geht die zweite Seite über eine Kante in die zweite Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen.

In einer bevorzugten Ausführungsform geht die erste Seite über eine Kante in die erste Seitenwand über, wobei sich die Kante in eine Richtung parallel zur Längsachse des Clips erstreckt. In einer bevorzugten Ausführungsform geht die zweite Seite über eine Kante in die zweite Seitenwand über, wobei sich die Kante in eine Richtung parallel zur Längsachse des Clips erstreckt.

In einer bevorzugten Ausführungsform ist der Bereich der zweiten Seite, über den der erste vorstehende Finger der ersten Seitenwand überlappt benachbart dem Bereich der zweiten Seite angeordnet, über den der zweite vorstehende Finger der ersten Seitenwand überlappt. Insbesondere bevorzugt sind die der erste vorstehende Finger der ersten Seitenwand und der zweite vorstehende Finger der ersten Seitenwand nebeneinander angeordnet.

Insbesondere bevorzugt ist der erste vorstehende Finger der ersten Seitenwand einem ersten Ende eines Grundkörpers der ersten Seitenwand (in Breitenrichtung der Seitenwand gesehen) näher, als einem gegenüberliegenden, zweiten Ende des Grundkörpers. Insbesondere bevorzugt ist das erste Ende das dem Kopf nähere Ende des Grundkörpers. Ergänzend oder alternativ ist der zweite vorstehende Finger der ersten Seitenwand dem zweiten Ende des Grundkörpers der ersten Seitenwand (in Breitenrichtung der Seitenwand gesehen) näher, als dem gegenüberliegenden, ersten Ende des Grundkörpers. Insbesondere bevorzugt ist das zweite Ende das der Spitze nähere Ende des Grundkörpers.

In einer bevorzugten Ausführungsform weist die erste Seitenwand einen flachen Grundkörper auf. In einer bevorzugten Ausführungsform weist die zweite Seitenwand einen flachen Grundkörper auf. Als flacher Grundkörper wird insbesondere bevorzugt ein Grundkörper verstanden, der eine flache, insbesondere bevorzugt in einer Ebene angeordnete Außenoberfläche aufweist. Insbesondere bevorzugt weist der flache Grundkörper zusätzlich eine gleichmäßige Höhe (Dicke) auf. Es ist denkbar, dass ein hier als flach bezeichneter flacher Grundkörper Ausbeulungen, beispielsweise kleine Noppen oder Führungsrippen aufweist oder Einbuchtungen oder Dellen. Auch ein solcher mit bewusst gewählten, singulären Abweichungen von der rein geometrisch flachen Form versehener Grundkörper wird im Zuge der vorliegenden Beschreibung als flacher Grundkörper verstanden. Weist der flache Grundkörper bewusst eine gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von der singulären Abweichung eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von jeder singulären Abweichung jeweils eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die Summe aller von den singulären Abweichung eingenommenen Flächen in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. In einer bevorzugten Ausführungsform ist der flache Grundkörper auch im geometrischen Sinne gänzlich flach und weist keine singulären Abweichung von der rein geometrisch flachen Form auf.

In einer bevorzugten Ausführungsform ist der erste Finger fluchtend mit einem flachen Grundkörper der ersten Seitenwand ausgeführt. Insbesondere bevorzugt liegt die nach außen weisende Oberfläche des Fingers in einer Ebene mit der nach außen weisenden Oberfläche des Grundkörpers. In einer bevorzugten Ausführungsform weist der vorstehende Finger zusätzliche die gleiche Materialstärke (Dicke; Höhe) auf wie der Grundkörper. Insbesondere bevorzugt befindet sich zwischen dem Grundkörper und dem ersten vorstehenden Finger kein Biegeabschnitt.

In einer besonders bevorzugten Ausführungsform weist die erste Seitenwand einen flachen Grundkörper auf, wobei der zweite vorstehende Finger einen nach außen oder nach innen gebogen Bogenabschnitt aufweist. In einer bevorzugten Ausführungsform weist der zweite vorstehende Finger einen Endabschnitt auf, der parallel zum flachen Grundkörper verläuft. Darunter wird insbesondere bevorzugt verstanden, dass der Endabschnitt des zweiten Fingers eine nach außen weisende Oberfläche aufweist, die in einer Ebene verläuft, die parallel zu einer Ebene verläuft, in der sich die nach außen weisende Oberfläche des Grundkörpers erstreckt. Insbesondere bevorzugt weist der Endabschnitt des zweiten vorstehenden Fingers zusätzlich die gleiche Materialstärke auf, wie der Grundkörper. In einer bevorzugten Ausführungsform befindet sich zwischen dem Grundkörper und dem Endabschnitt des zweiten Fingers ein Biegeabschnitt. Insbesondere bevorzugt ist der Biegeabschnitt als Doppelbiegung ausgebildet, der zunächst in eine erste Richtung gebogen ist und dann im weiteren Verlauf in eine andere Richtung gebogen ist.

In einer bevorzugten Ausführungsform hat die zweite Seitenwand eine Aufnahme, um den ersten vorstehenden Finger aufzunehmen. Als Aufnahme wird insbesondere eine Eindellung in einen Grundkörper der zweiten Seitenwand verstanden oder ein Abschnitt der Seitenwand, der sich parallel, aber auch parallel versetzt zu einem flachen Grundkörper der Seitenwand erstreckt, wobei der Übergang zwischen dem flachen Grundkörper und dem Abschnitt vorzugsweise durch eine Kehle gebildet wird. In einer besonders bevorzugten Ausführungsform fluchtet der erste vorstehende Finger der ersten Seitenwand mit einem flachen Grundkörper der zweiten Seitenwand. Um bei einer derartigen Ausführungsform ein Überlappen des ersten vorstehenden Fingers der ersten Seitenwand mit einem Bereich der zweiten Seitenwand zu ermöglichen, wird der Bereich der zweiten Seitenwand, mit dem ein derart ausgeführter erster vorstehender Finger der ersten Seitenwand überlappt durch eine rücksprungartige oder taschenartige oder als Eindellung ausgeführte Aufnahme des zweiten Grundkörpers gebildet.

In einer bevorzugten Ausführungsform hat die zweite Seitenwand zumindest einen vorstehenden Finger, der über einen Bereich der ersten Seitenwand überlappt. In einer bevorzugten Ausführungsform ist der vorstehende Finger der zweiten Seitenwand so ausgebildet, wie der zweite vorstehende Finger der ersten Seitenwand.

In einer bevorzugten Ausführungsform weist die erste Seitenwand einen flachen Grundkörper auf, wobei eine Schmalseite des Grundkörpers der ersten Seite der zweiten Seitenwand zugewandt ist, wobei die zweite Seitenwand einen flachen Grundkörper aufweist, wobei eine Schmalseite des Grundkörpers der zweiten Seitenwand der ersten Seitenwand zugewandt ist. In einer bevorzugten Ausführungsform erstreckt sich die Schmalseite des Grundkörpers rechtwinklig zu einer nach außen weisenden Oberfläche des Grundkörpers. In dieser bevorzugten Ausführungsform ist die Schmalseite der ersten Seitenwand und/oder die Schmalseite der zweiten Seitenwand zumindest abschnittweise eben ausgebildet. In einer bevorzugten Ausführungsform erstreckt sich die Schmalseite der ersten Seitenwand in einer Ebene, die parallel zur Längsachse verläuft oder die Längsachse des Clips enthält und/oder die Schmalseite der zweiten Seitenwand einer Ebene, die parallel zur Längsachse verläuft oder die Längsachse des Clips enthält.

In einer bevorzugten Ausführungsform überlappt der erste vorstehende Finger über einen Bereich des Grundkörpers der zweiten Seitenwand, der an die ebene Schmalseite der zweiten Seitenwand angrenzt, und/oder der zweite vorstehende Finger über einen Bereich des Grundkörpers der zweiten Seitenwand, der an die ebene Schmalseite der zweiten Seitenwand angrenzt.

In einer bevorzugten Ausführungsform weist die erste Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die zweite Seitenwand vorspringenden Vorsprung auf. In einer bevorzugten Ausführungsform greift der Vorsprung in einen Rücksprung ein, der in der zweiten Seitenwand vorgesehen ist. In einer bevorzugten Ausführungsform weist die zweite Seitenwand einen flachen Grundkörper und eine in einem ersten Abschnitt ebene Schmalseite auf, wobei sich der Rücksprung an den ebenen Abschnitt der Schmalseite anschließt. Ergänzend oder alternativ weist die zweite Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die erste Seitenwand vorspringenden Vorsprung auf. In einer bevorzugten Ausführungsform greift der Vorsprung in einen Rücksprung ein, der in der ersten Seitenwand vorgesehen ist. In einer bevorzugten Ausführungsform weist die erste Seitenwand einen flachen Grundkörper und eine in einem ersten Abschnitt ebene Schmalseite auf, wobei sich der Rücksprung an den ebene Abschnitt der Schmalseite anschließt. Dabei sind diese Vorsprünge keine vorstehenden Finger, weil sie nicht mit einem Bereich der gegenüberliegenden Seitenwand überlappen. Durch dieses Zusammenwirken aus Vorsprüngen und Rücksprüngen an den Schmalseiten der Grundkörper der Seitenwände kann eine Verzahnung erzeugt werden, die die Steifigkeit des Clips erhöht, weil sie Relativbewegungen der Grundkörper der Seitenwände in Richtung parallel zur Längsrichtung des Clips verhindert.

In einer bevorzugten Ausführungsform ist ein Bogen an einem Ende der ersten Seite vorgesehen, wobei der Scheitel des Bogens am Ende der ersten Seite einen Teil der Spitze des Clips ausbildet und/oder ein Bogen an einem Ende der zweiten Seite vorgesehen, wobei der Scheitel des Bogens am Ende der zweiten Seite einen Teil der Spitze des Clips ausbildet. Dabei kann der Bogen ausgehend von der Seite nach innen ausgeführt werden, wie dies beispielsweise bei dem Umbiegeabschnitt 15 der WO 2012/104205 A1 vorgesehen ist. Ebenso kann der Bogen nach außen gebogen sein.

In einer bevorzugten Ausführungsform hat die erste Seite einen flachen Grundkörper, der sich von dem Kopf in Richtung auf die Spitze erstreckt, und die erste Seitenwand einen flachen Grundkörper, der in einem Winkel zum flachen Grundkörper der ersten Seite steht, insbesondere bevorzugt in einem Winkel zwischen 45° und 135°, insbesondere bevorzugt in einem Winkel von 90 °.

In einer bevorzugten Ausführungsform hat die zweite Seite einen flachen Grundkörper, der sich von dem Kopf in Richtung auf die Spitze erstreckt, und die zweite Seitenwand einen flachen Grundkörper, der in einem Winkel zum flachen Grundkörper der zweiten Seite steht, insbesondere bevorzugt in einem Winkel zwischen 45° und 135°, insbesondere bevorzugt in einem Winkel von 90 °.

In einer bevorzugten Ausführungsform ist der flache Grundkörper der ersten Seite parallel zum flachen Grundkörper der zweiten Seite ausgerichtet. In einer bevorzugten Ausführungsform weist der Clip eine erste Seite mit flachem Grundkörper, eine zweite, parallel zur ersten Seite ausgerichtete Seite mit flachem Grundkörper, eine erste Seitenwand mit flachem Grundkörper, die sich in einem Winkel von der ersten Seite zur zweiten Seite erstreckt, eine zweite Seitenwand mit flachem Grundkörper, die sich von der zweiten Seite in Richtung auf die erste Seite erstreckt, wobei die erste Seitenwand mit der zweiten Seitenwand fluchtend ausgebildet ist auf, sowie eine dritte Seitenwand mit flachem Grundkörper, die sich in einem Winkel von der ersten Seite zur zweiten Seite erstreckt, und eine vierte Seitenwand mit flachem Grundkörper, die sich von der zweiten Seite in Richtung auf die erste Seite erstreckt, wobei die dritte Seitenwand mit der vierten Seitenwand fluchtend ausgebildet ist auf. Eine derartige Ausführungsform kann in einem Querschnitt senkrecht zur Längsachse des Clips einen Querschnitt in Form eines rechteckförmigen Rings aufweisen, der nur durch einen Spalt zwischen erster Seitenwand und zweiter Seitenwand sowie durch einen Spalt zwischen dritter Seitenwand und vierter Seitenwand unterbrochen wird.

In einer bevorzugten Ausführungsform weist der Kopf des Clips eine Kopffläche auf, die der Clipsfläche zugewandt ist. In einer besonders bevorzugten Ausführungsform verläuft die Clipsfläche parallel zur Kopffläche, wenn das federnde Element sich in seiner Ausgangslage befindet, also nach außen gefedert ist. In einer bevorzugten Ausführungsform ist die Kopffläche an einem feststehenden Bereich des Kopfes ausgebildet. In einer alternativen Ausführungsform weist der Kopf federnde Arme auf, die in eine Richtung parallel zur Längsrichtung des Clips federn können, wobei die Kopffläche an einem Abschnitt des Arms vorgesehen ist, vorzugsweise an einem Endabschnitt des Arms vorgesehen ist.

In einer bevorzugten Ausführungsform sind der Kopf und die erste Seite und die erste Seitenwand und die zweite Seite und die zweite Seitenwand alle Teil eines einstückigen Elements, die durch das Biegen von Abschnitten eines Metallabschnitts erzeugt wurden. Ebenso ist es denkbar, den erfindungsgemäßen Clip aus Kunststoff, beispielsweise durch Spritzguss herzustellen.

Der erfindungsgemäße Clip wird insbesondere bevorzugt zum Befestigen eines Elements (dem zweiten Element) an einem Karosserieteil (dem erstes Element) eines Fahrzeugs, insbesondere bevorzugt an Rahmen eines Fahrzeugs verwendet. Insbesondere bevorzugt wird der Clip zum Befestigen eines Paneels (zweites Element) an dem Rahmen eines Fahrzeugs (erstes Element) verwendet. Besonders bevorzugt wird der Clip zum Befestigen eines Airbags an einem Karosserieteil, insbesondere bevorzugt eines Rahmens eines Fahrzeugs verwendet.

Die erfindungsgemäße Vorrichtung weist ein erstes Element und ein an dem ersten Element befestigtes zweites Element auf, wobei das erste Element ein Loch aufweist und das zweite Element mittels eines erfindungsgemäßen Clips an dem ersten Element befestigt ist, wobei der Clips das Loch derart durchgreift, dass der Kopf des Clips - und soweit vorhanden das zweite Bauteil des Clip - auf einer Seite des ersten Elements und die Spitze des Clips auf der gegenüberliegenden Seite des Elements angeordnet ist. In einer bevorzugten Ausführungsform durchgreift der Clips das Loch derart, dass der Kopf des Clips - und soweit vorhanden das zweite Bauteil des Clips auf einer Seite des ersten Elements und eine Clipsfläche (eine Kontaktfläche des Vorsprungs des Schaftes) des Clips auf der gegenüberliegenden Seite des Elements angeordnet ist. In einer bevorzugten Ausführungsform ist das erste Element ein Karosserieteil eines Fahrzeugs, vorzugsweise ein Rahmen eines Fahrzeugs. In einer bevorzugten Ausführungsform ist das zweite Element eine Paneel oder ein Airbag.

Nachfolgend wird die Erfindung anhand einer lediglich Ausführungsbeispiel der Erfindung näher darstellenden Zeichnung erläutert.

Darin zeigen:
- Fig. 1: eine perspektivische Seitenansicht von schräg unten auf einen erfindungsgemäßen einteiligen Clip;
- Fig. 2: eine perspektivische Ansicht von unten auf die Spitze des einteiligen Clips
- Fig. 3: eine geschnittene, perspektivische Seitenansicht des einteiligen Clips,
- Fig. 4: eine perspektivische Ansicht von schrägoben auf einen erfindungsgemäßen, zweiteiligen Clip, wobei das zweite Bauteil des erfindungsgemäßen zweiteiligen Clips durchscheinend dargestellt ist,
- Fig. 5: eine perspektivische Ansicht von schrägoben auf den Clip gemäß Figur 4 aus einer etwas geänderten Perspektive und mit nicht durchscheinendem zweiten Bauteil,
- Fig. 6: eine perspektivische Ansicht von schrägunten auf den Clip gemäß Figur 4,
- Fig. 7: eine Seitenansicht des Clips gemäß Figur 4,
- Fig. 8: eine Frontansicht des Clips gemäß Figur 4,
- Fig. 9: eine Ansicht von oben auf den Clip gemäß Figur 4,
- Fig. 10: eine Draufsicht auf das zweite Bauteil des Clips gemäß Fig. 4,
- Fig. 11: eine perspektivische Ansicht von oben auf das zweite Bauteil des Clips gemäß Fig. 4,
- Fig. 12: eine perspektivische Ansicht von schräg oben auf eine zweite Ausführungsform eines erfindungsgemäßen, zweiteiligen Clip, wobei das zweite Bauteil des erfindungsgemäßen zweiteiligen Clips durchscheinend dargestellt ist,
- Fig. 13: eine perspektivische Ansicht von schrägoben auf den Clip gemäß Figur 12 mit nicht durchscheinendem zweiten Bauteil,
- Fig. 14: eine Frontansicht des Clips gemäß Figur 12,
- Fig. 15: eine Seitenansicht des Clips gemäß Figur 12,
- Fig. 16: eine Ansicht von oben auf den Clip gemäß Figur 12,
- Fig. 17: eine Draufsicht auf das zweite Bauteil des Clips gemäß Fig. 12,
- Fig. 18: eine perspektivische Ansicht von oben auf das zweite Bauteil des Clips gemäß Fig. 12,
- Fig. 19: eine perspektivische Ansicht von schräg oben auf einen zweiteiligen Clip, wobei das zweite Bauteil des Clips durchscheinend dargestellt ist, und
- Fig. 20: eine Seitenansicht des Clips gemäß Figur 115

Der in den Fig. dargestellte Clip zum Befestigen eines ersten Elements an einem zweiten Element weist einen Kopf 1 und eine Spitze 2 auf. Zwischen dem Kopf 1 und der Spitze 2 erstreckt sich ein aus mehreren Teilabschnitten zusammengesetzter Schaft 3.

Der Schaft 3 weist eine erste Seite 4 und eine der ersten Seite 4 bezogen auf eine Längsachse A des Clips gegenüberliegend angeordnete und parallel zur ersten Seite 4 verlaufende zweite Seite 5 auf. Sowohl die erste Seite 4 als auch die zweite Seite 5 erstrecken sich von dem Kopf 1 in Richtung auf die Spitze 2. Die erste Seite 4 endet in einem bogenförmigen Biegeabschnitt 6, der ausgehend von der ersten Seite 4 nach innen gebogen ist. Der Scheitel des Bogens des Biegeabschnitts 6 bildet einen Teil der Spitze 2. Die zweite Seite 5 endet in einem bogenförmigen Biegeabschnitt 7, der nach innen gebogen ist. Der Scheitel des Bogens des Biegeabschnitts 7 bildet einen Teil der Spitze 2 des Clips.

Die erste Seite 4 geht über eine Kante 8 in den flachen Grundkörper 9 einer ersten Seitenwand 10 über, die sich von der ersten Seite 4 in Richtung auf die zweite Seite 5 erstreckt. Die zweite Seite 5 geht über eine Kante 11 in den flachen Grundkörper 12 einer zweiten Seitenwand 13 über, die sich von der zweiten Seite 5 in Richtung auf die erste Seite 4 erstreckt.

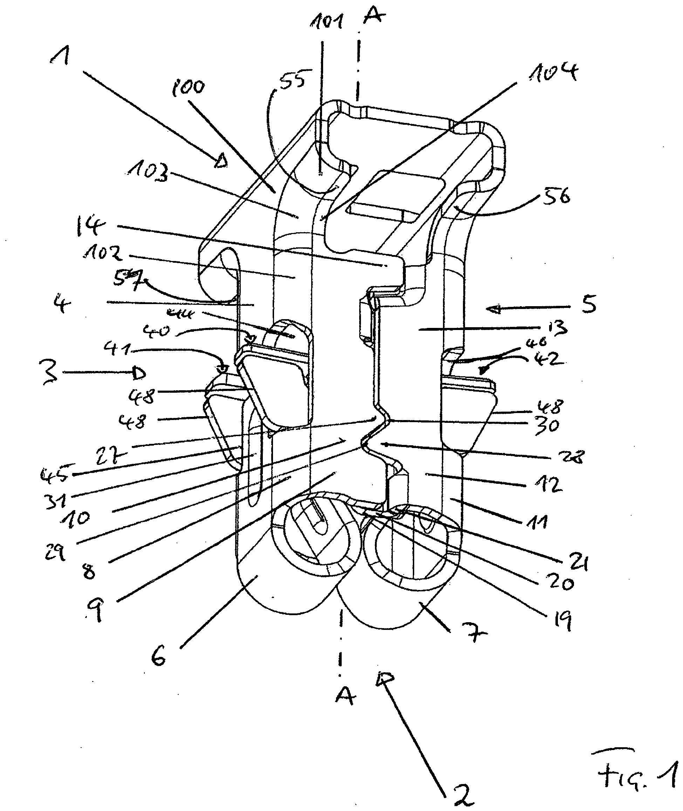

Der in den Fig. dargestellte Clip ist bezüglich einer Ebene, die die Längsachse A enthält und parallel zum Grundkörper 9 und zum Grundkörper 12 verläuft spiegelsymmetrisch aufgebaut. Von der Seite 4 erstreckt sich somit eine (in der Fig. 1 nicht dargestellte) dritte Seitenwand 50 in Richtung auf die zweite Seite 5, wobei die dritte Seitenwand 50 entsprechend der ersten Seitenwand 10 ausgeführt ist. Ferner erstreckt sich von der zweiten Seite 5 eine in der Fig. 1 nicht dargestellte vierte Seitenwand 51 in Richtung auf die erste Seite 4, wobei die vierte Seitenwand 51 entsprechend der zweiten Seitenwand 13 ausgeführt ist. Der erfindungsgemäße Clip in der in den Fig. dargestellten Ausführungsform ist ein einstückiges Element und wurde durch Biegen von Abschnitten eines Metallabschnitts erzeugt.

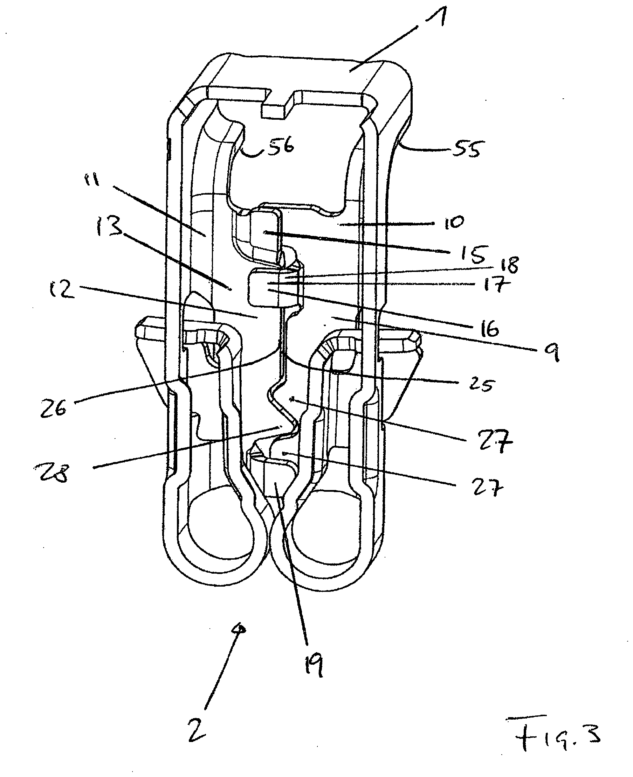

Die erste Seitenwand weist einen ersten vorstehenden Finger 14 auf, der über einen Bereich der zweiten Seitenwand 13 überlappt. Hierzu weist die zweite Seitenwand 13 die in Fig. 3 besser ersichtliche Aufnahme in Form einer Eindellung 15 auf. Ferner weist die erste Seitenwand 10 einen zweiten vorstehenden Finger 16 auf (vgl. Fig. 3). Dieser zweite vorstehende Finger 16 der ersten Seitenwand 10 überlappt einen anderen Bereich der zweiten Seitenwand 13. Dabei ist der erste vorstehende Finger 14 der ersten Seitenwand fluchtend mit dem flachen Grundkörper 9 der ersten Seitenwand ausgeführt, während der zweite vorstehende Finger 16 nach innen gebogen ist und die zweite Seitenwand 13 hintergreift. Dazu weist der zweite Finger 16 einen zwischen dem flachen Grundkörper 9 und dem Endabschnitt 17 des zweiten Fingers 16 vorgesehenen Biegeabschnitt 18 auf, der zunächst nach innen gebogen und dann in die entgegengesetzte Richtung gebogen ist, so dass der Endabschnitt 17 des Fingers 16 parallel zum Grundkörper 12 der zweiten Seitenwand 13 verläuft. Die zweite Seitenwand 13 weist einen vorstehenden Finger 19 auf, der über einen Bereich der ersten Seitenwand 10 überlappt. Der vorspringende Finger 19 der zweiten Seitenwand 13 ist vergleichbar dem zweiten vorstehenden Finger 16 in der ersten Seitenwand ausgebildet und weist einen Endabschnitt 20 auf, der parallel zum Grundkörper 9 der ersten Seitenwand verläuft sowie einen Biegeabschnitt 21, der zwischen dem Grundkörper 12 der zweiten Seitenwand 13 und dem Endabschnitt 20 vorgesehen ist.

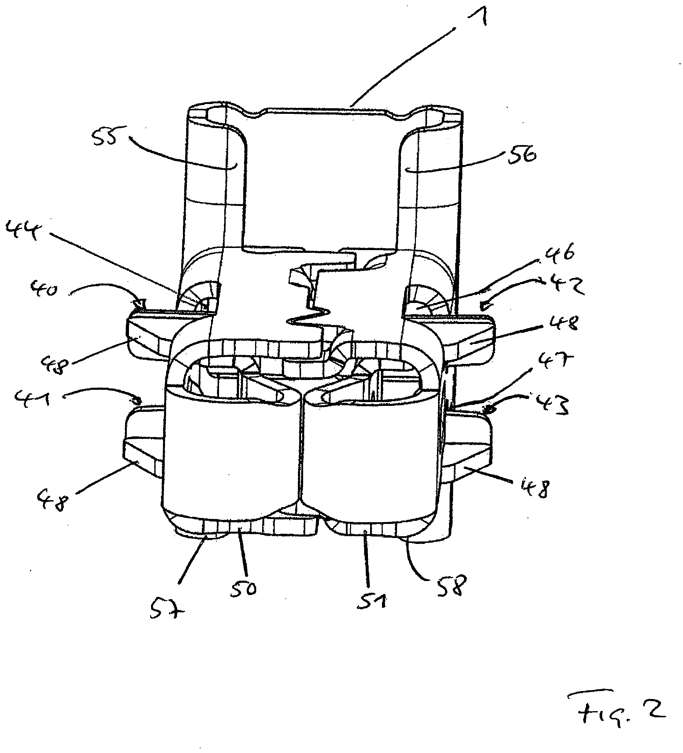

Der Grundkörper 9 der ersten Seitenwand 10 weist eine Schmalseite 25 auf. Der Grundkörper 12 der zweiten Seitenwand 13 weist eine Schmalseite 26 auf. Die Schmalseite 25 und die Schmalseite 26 sind über einen ersten Abschnitt eben ausgeführt und verlaufen in diesem Abschnitt im Wesentlichen parallel zueinander, wobei der ebene Abschnitt der Schmalseite 26 der zweiten Seitenwand 13 länger ist als der ebene Abschnitt der Schmalseite 25 der ersten Seitenwand 10. Der zweite vorstehende Finger 16 überlappt über einen Bereich des Grundkörpers 12 der zweiten Seitenwand 13, der an den ebenen Abschnitt der Schmalseite 26 der zweiten Seitenwand angrenzt. In dem Bereich, in dem der zweite vorstehende Finger 16 den Grundkörper 12 der zweiten Seitenwand 13 hintergreift weist diese einen ebenen Abschnitt der Schmalseite 26 auf. Wie in den Fig. 1 und 2 besonders gut ersichtlich schließt sich an den ebenen Abschnitt der Schmalseite 25 und an den ebenen Abschnitt der Schmalseite 26 ein Profil aus Vorsprüngen 27, 28 und Ausnehmungen 29, 30 an. Hier greift der jeweilige Vorsprung 27, 28 der jeweiligen Seitenwand 10, 13 in einen Rücksprung 30, 29 der gegenüberliegenden Seitenwand 13, 10 ein. Die Vorsprünge 27, 28 sind derart ausgeführt, dass sie nicht mit einem Bereich der gegenüberliegenden Seitenwand überlappen, sondern lediglich in dort vorgesehene Rücksprünge 29, 30 eingreifen.

In dem in den Fig. dargestellten Ausführungsbeispiel weisen die erste Seite 4 und die zweite Seite 5 jeweils einen flachen Grundkörper auf. In der Fig. 1 ist zu erkennen, dass der ansonsten flache Grundkörper 4 eine kleine Erhebung 31 aufweist. Dies verdeutlicht dass im Rahmen dieser Beschreibung verwendete Verständnis des Begriffs "flacher Grundkörper", das nur in einer besonders bevorzugten Ausführungsform ein geometrisch exakt flachen Grundkörper vorsieht, aber in anderen Ausführungsformen - wie hier - auf solche Grundkörper als "flache Grundkörper" bezeichnet, die aufgrund kleiner Vorsprünge von einer geometrisch exakt flachen Form abweichen.

Bei dem in den Fig. gezeichneten Ausführungsbeispiel steht der flache Grundkörper der ersten Seite 4 in einem Winkel von 90 Grad zum flachen Grundkörper 9 der ersten Seitenwand 10. Der flache Grundkörper der zweiten Seite 5 steht in einem Winkel von 90 Grad zum flachen Grundkörper 12 der zweiten Seitenwand 13. Die erste Seitenwand 10 und die zweite Seitenwand 13 sind fluchtend zueinander ausgeführt (ihre nach außen weisenden Oberflächen befinden sich in einer Ebene). Die in den Fig. dargestellte Ausführungsform weist vier Clipsflächen 40, 41, 42, 43 auf. Die jeweilige Clipsfläche ist Teil eines federnden Elements das jeweils durch eine Ausnehmung 44, 45, 46, 47, die sich im jeweiligen Übergang zwischen der Seite 4, 5 und der ersten Seitenfläche 10, der zweiten Seitenfläche 13, der dritten Seitenfläche 50 und der vierten Seitenfläche 51 befindet, hindurch tritt. Das jeweilige elastische Element weist eine Abschrägung 48 auf, die bewirkt, dass das fehlende Element, wenn der Clip in ein Loch eines Elements eingeführt wird, mit dem Rand des Lochs in Kontakt kommt und durch das weitere Einschieben des Clips entgegen der Federkraft nach innen gedrückt wird, aber nach Durchschreiten des Lochs in dem Element aufgrund der Federkraft wieder nach außen federt und dadurch das entsprechende Element hintergreift.

Die Clipsflächen 40, 41, 42, 43 sind dem Kopf 1 zugewandt. Der Kopf weist vier Kopfflächen 55, 56, 57, 58 auf, die den Clipsflächen 40, 41, 42, 43 zugewandt sind. Das erste Element und das zweite Element werden zwischen den Clipsflächen 40, 41, 42, 43 und den Kopfflächen 50, 56, 57, 58 gehalten und dadurch das zweite Element an dem ersten Element befestigt.

Der Kopf 1 weist eine Seitenfläche 100 auf und die der Spitze 2 zugewandte Kontaktfläche (Kopffläche) 55, wobei die Seitenfläche 100 des Kopfes über eine erste gerundete Kante 101 in die der Spitze 2 zugewandte Kontaktfläche 55 des Kopfes übergeht und die erste Seite 3 über eine zweite gerundete Kante 102 in die erste Seitenwand 10 übergeht und die erste gerundete Kante 101 über einen Bogenabschnitt 103 in die zweite gerundete Kante 102 übergeht. Die der Spitze 2 zugewandte Kontaktfläche 55 des Kopfes 1 geht über einen Bogenabschnitt 104 in die erste Seitenwand 10 über.

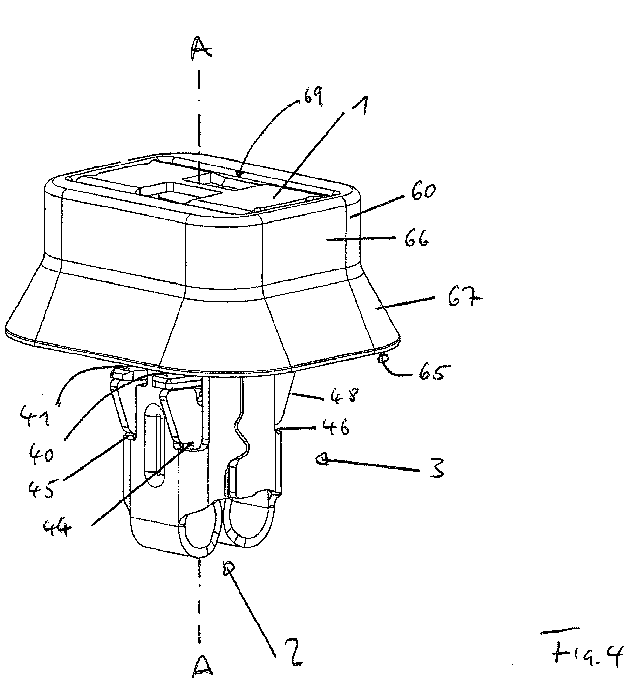

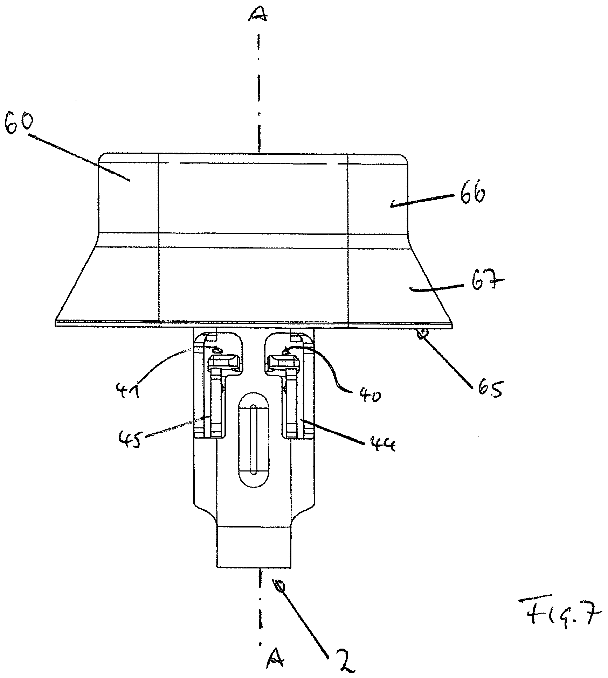

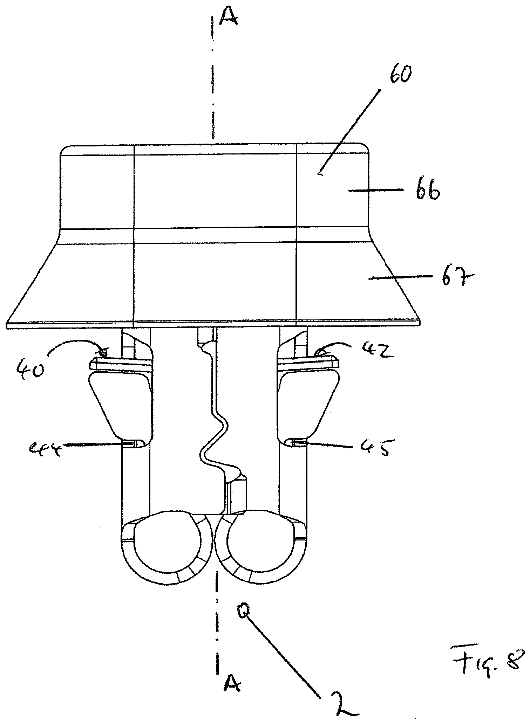

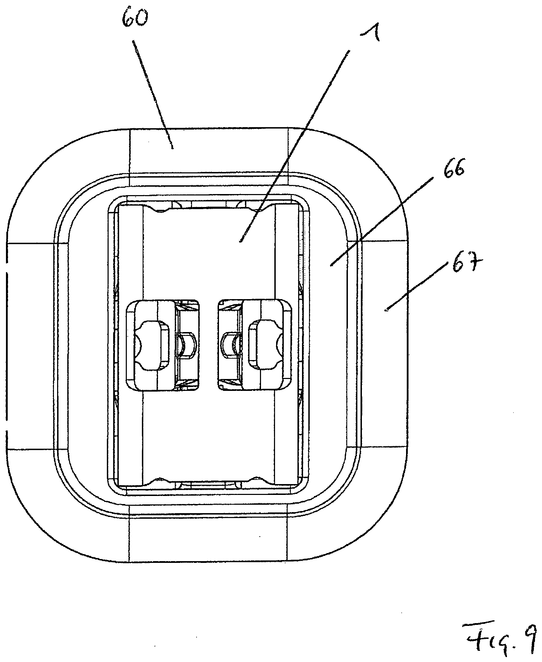

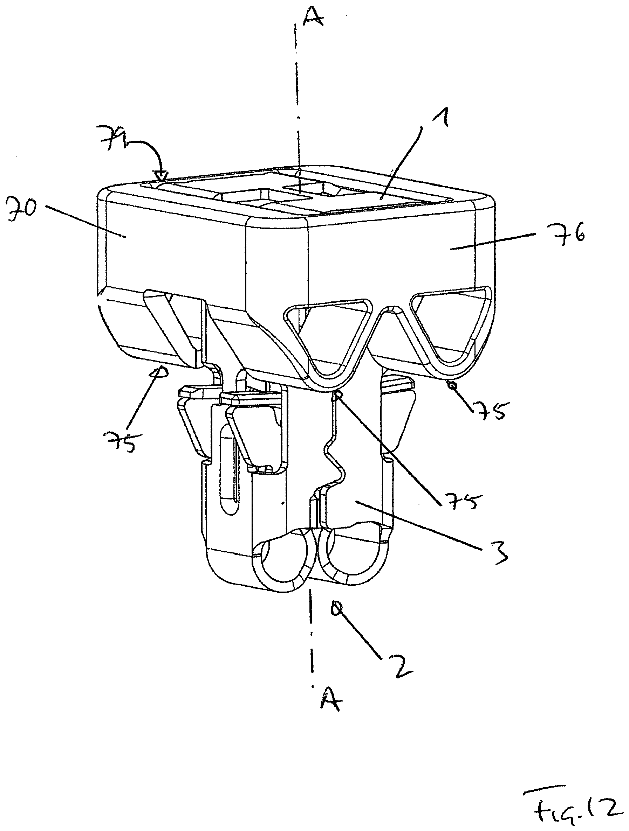

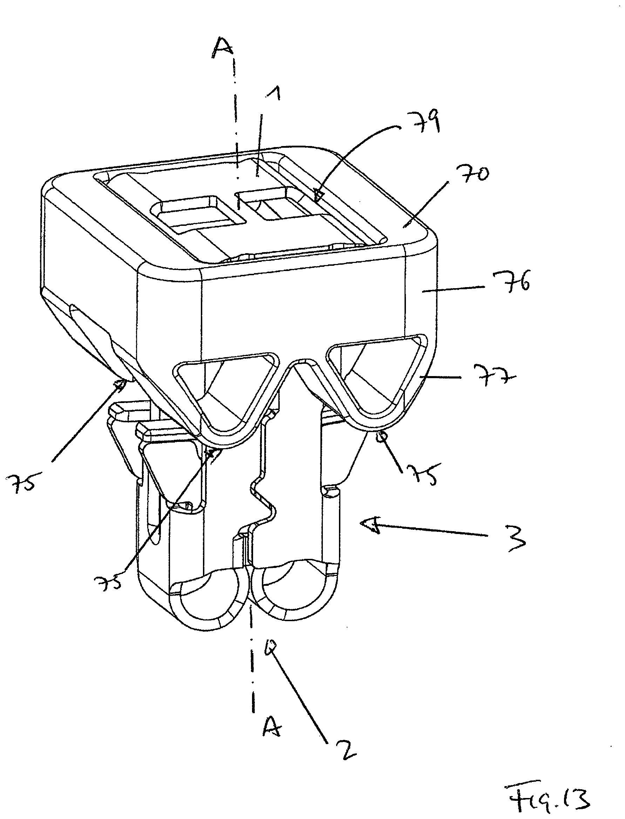

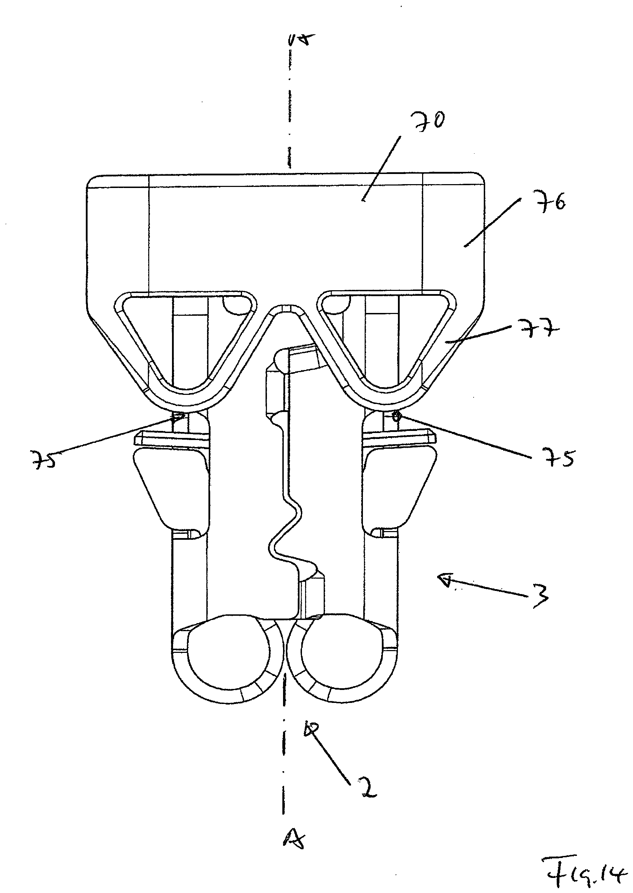

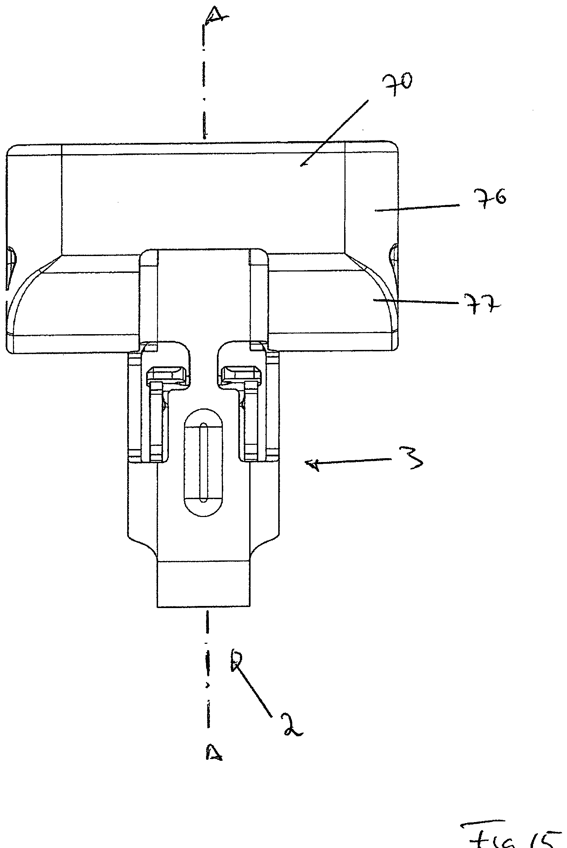

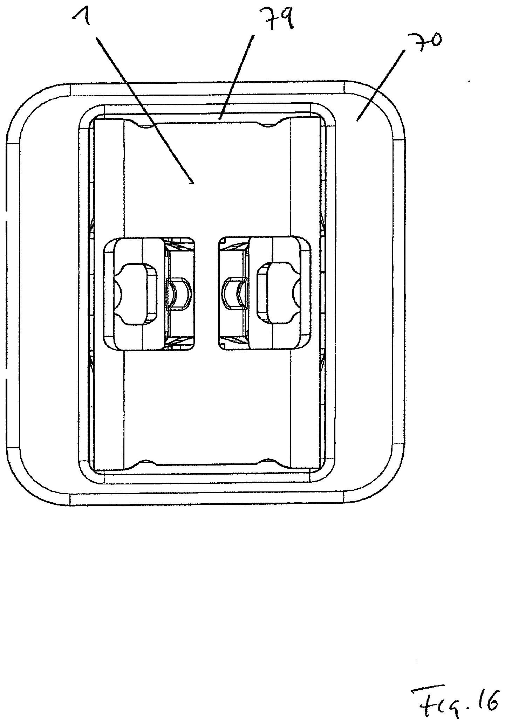

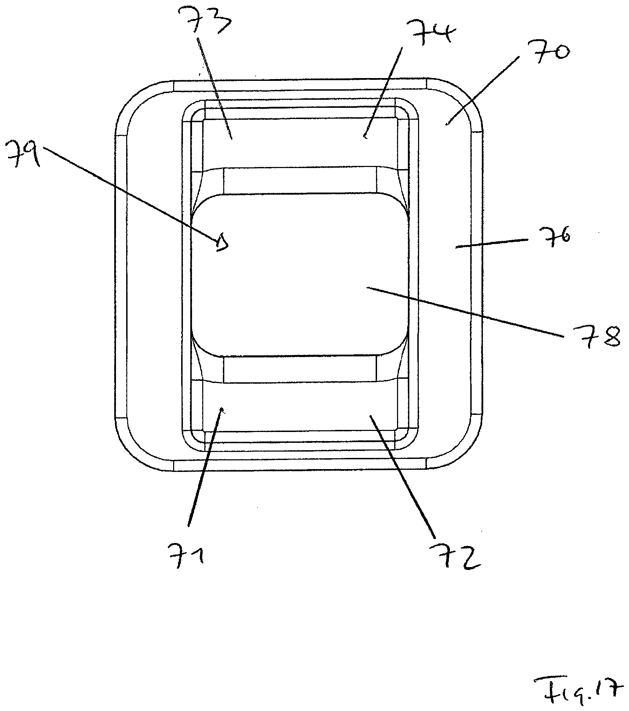

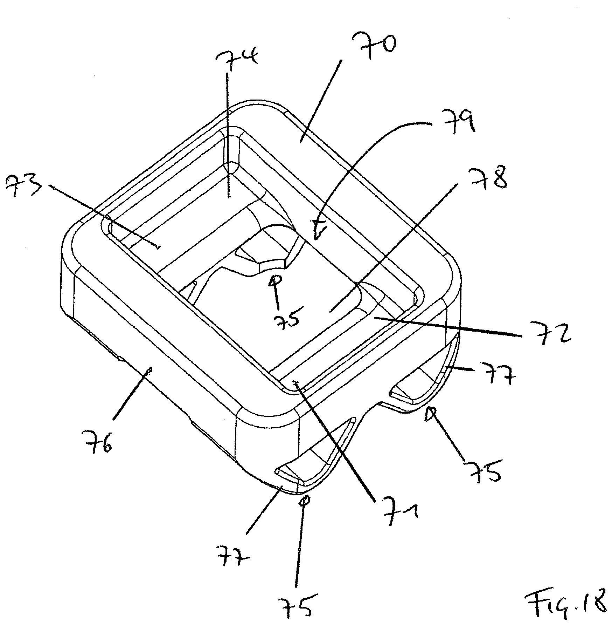

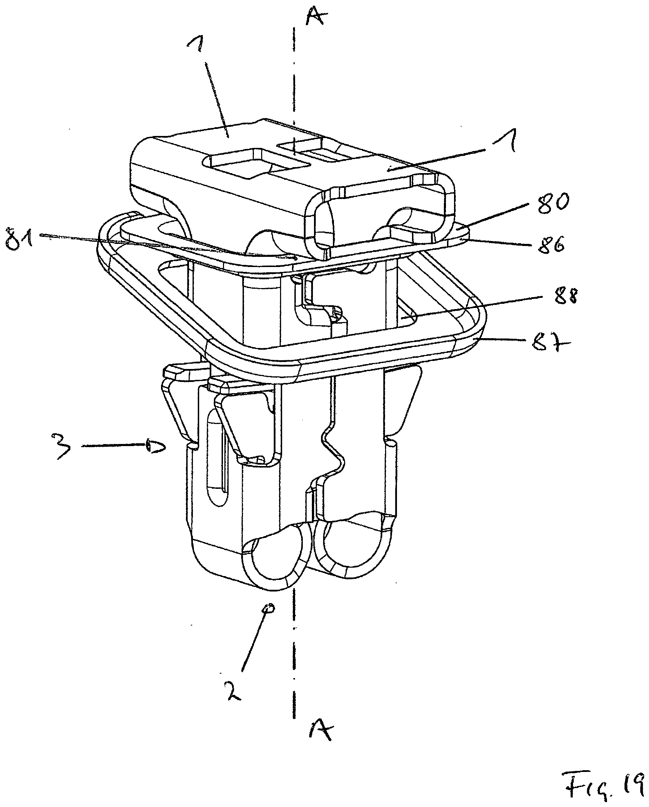

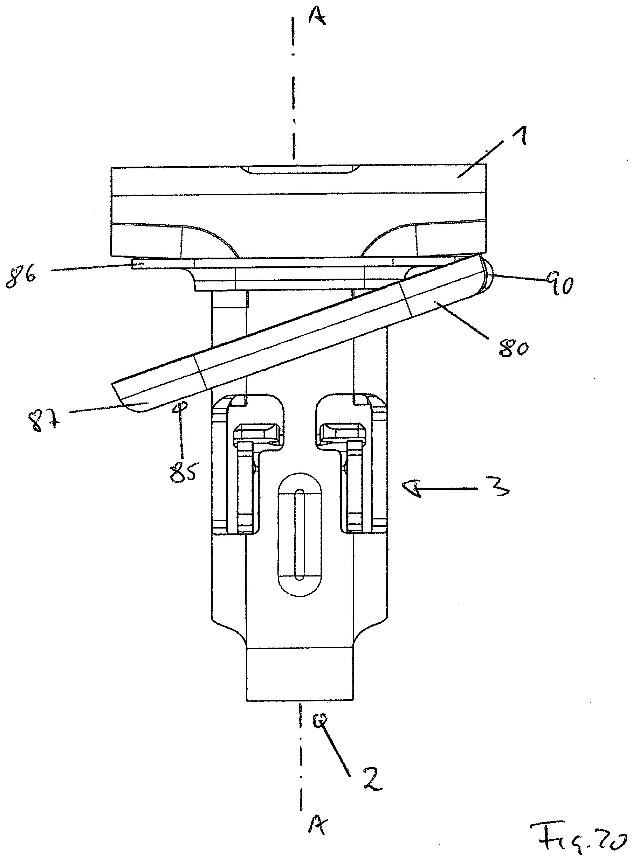

Nachfolgend werden drei Ausführungsformen eines erfindungsgemäßen, zweiteiligen Clips beschrieben, nämlich eine erste Ausführungsform anhand der Figuren 4 bis 11, eine zweite Ausführungsform anhand der Figuren 12 bis 18 und eine dritte Ausführungsform anhand der Figuren 19 und 20. Alle drei zweiteiligen Ausführungsformen haben gemeinsam, dass ihr erstes Bauteil ein einteiliger Clip ist, wie er bereits vorstehend anhand der Figuren 1 bis 3 beschrieben wurde.

Der in den Figuren 4 bis 11 dargestellte zweiteilige Clip zum Befestigen eines Elements an einem anderen Element weist ein erstes Bauteil auf, das dem in den Figuren 1 bis 3 dargestellten Clip entspricht und einen Kopf 1 und eine Spitze 2 aufweist. Zwischen dem Kopf 1 und der Spitze 2 erstreckt sich ein aus mehreren Teilabschnitten zusammengesetzter Schaft 3. Es sind vier Vorsprünge an dem Schaft 3 vorgesehen, wobei jeder Vorsprung durch einen Teil eines federnden Elements gebildet wird, das durch eine Ausnehmung 44, 45, 46, 47 in dem Schaft 3 hindurchgreift. In Form der vier Clipsflächen 40, 41, 42, 43 weisen die Vorsprünge jeweils eine dem Kopf 1 zugewandte Kontaktfläche auf. Der Kopf 1 weist vier Kopfflächen (Kontaktflächen) 55, 56, 57, 58 auf, die den Vorsprüngen zugewandt sind. Da die Vorsprünge Teil der federnden Elemente sind, können sie unter Krafteinwirkung gegen eine zunehmende Federkraft aus der in der Fig. dargestellten Ruheposition bewegt werden, wobei die Federkraft bewirkt, dass die Vorsprünge nach Wegfall der Krafteinwirkung in seine Ruheposition zurückkehrt. Die Ruheposition ist die Position, in der das federnde Element keine Kraft ausübt.

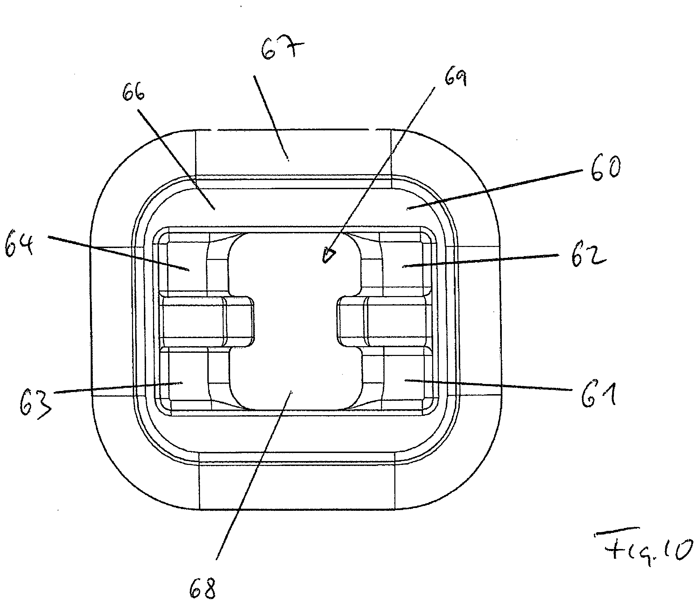

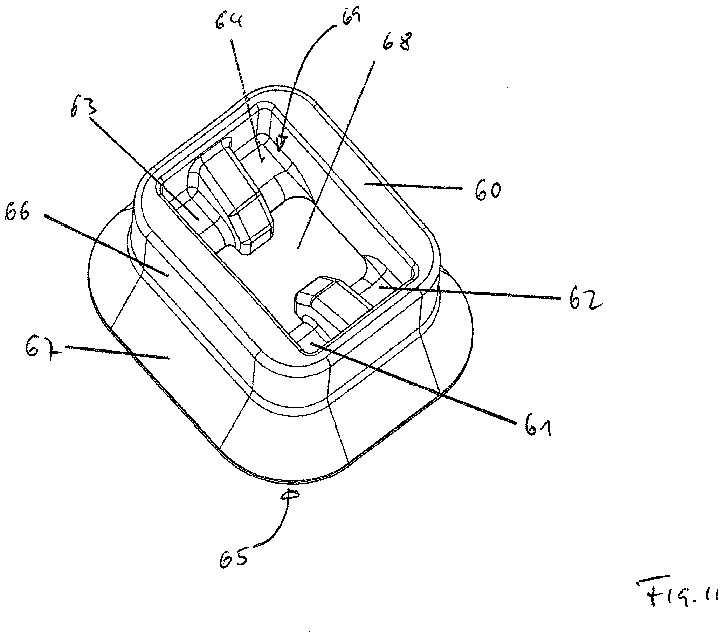

Der zweiteilige Clip weist ein zweites Bauteil 60 auf. Das zweite Bauteil weist vier Stützflächen 61, 62, 63, 64 (vgl. Fig. 10 und 11) auf. Jeder Stützfläche 61, 62, 63, 64 des zweiten Bauteils 60 ist einer der als Kopfflächen 55, 56, 57, 58 ausgebildeten Kontaktflächen des Kopfes zugewandt, wobei sich die jeweilige Kontaktfläche (Kopffläche) 55, 56, 57, 58 des Kopfes 1 auf die jeweilige Stützfläche 61, 62, 63, 64 abstützt. Ferner weist das zweite Bauteil 60 eine Kontaktfläche 65 auf, die den Vorsprüngen zugewandt ist. Die Kontaktfläche 65 des zweiten Bauteils 60 ist als rechteckförmiger Ring mit gerundeten Ecken ausgeführt.

Das zweite Bauteil 60 weist einen oberen Teil 66 auf, der einen konstanten Außenumriss aufweist und einen unteren Teil 67, der sich schirmartig zur Spitze 2 hin erweitert und in der den Vorsprüngen zugewandten Kontaktfläche 65 endet.

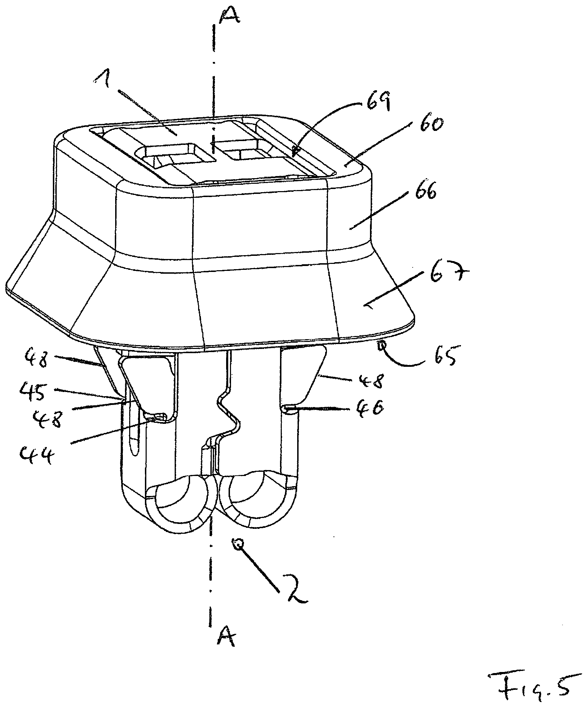

Das zweite Bauteil 60 weist eine Öffnung auf, durch die der Schaft 3 gesteckt ist. Die Öffnung 68 ist am Grund einer Ausnehmung 69 des zweiten Bauteils 60 ausgeführt. Die Ausnehmung 69 des zweiten Bauteils 60 nimmt den Kopf 1 auf. Dabei ist die Ausnehmung 69 so tief, dass wenn sich die Kontaktflächen 55, 56, 57, 58 des Kopfes 1 auf den jeweiligen Stützflächen 61, 62, 63, 64 abstützen, der Kopf 1 nicht mehr aus der Ausnehmung 1 herausragt (vgl. bspw. Fig. 4 und 5). In den in den Ausführungsbeispielen gemäß Figuren 4 bis 11 und 12 bis 18 dargestellten beiden Ausführungsformen schließt der Kopf 1 plan mit dem die Ausnehmung 69 begrenzenden Rand des zweiten Bauteils 60 ab.

In den beiden Ausführungsbeispielen gemäß Figur 4 bis 11 und 12 bis 18 ist das erste Bauteil des zweiteiligen Clips (der unter Bezugnahme auf die Figuren 1 bis 3 näher beschriebene) aus Metall hergestellt, während das zweite Bauteil 60 (Figuren 4 bis 11), bzw. 70 (Figuren 12 bis 18) aus Kunststoff hergestellt ist.

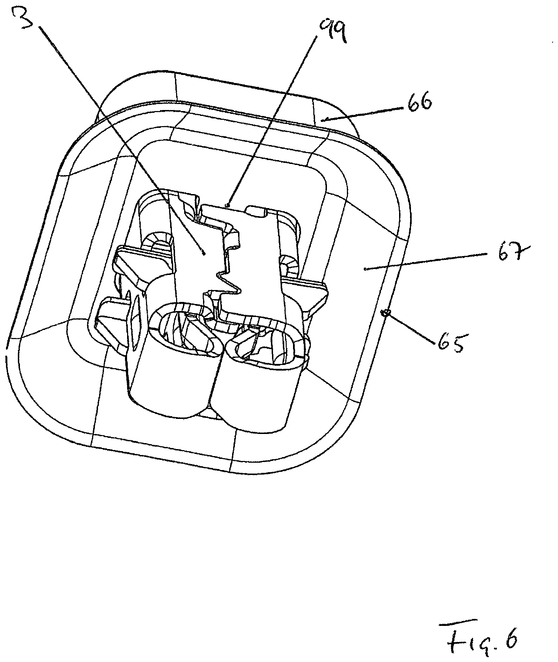

Das zweite Bauteil 60 weist zwei Vorsprünge 99 auf, die in die Öffnung 68 hineinragen. Diese Vorsprünge 99 des zweiten Bauteils 60 dienen als Verliersicherung. Wie die Fig. 6 zeigt, greift der Vorsprung 99 in eine Ausnehmung an dem ersten Bauteil ein und kommt in Kontakt mit dem Rand der Ausnehmung des ersten Bauteils. Durch die Interaktion zwischen dem Vorsprung 99 und dem Rand der Ausnehmung des ersten Bauteils wird verhindert, dass sich das zweite Bauteil 60 in Richtung auf die Spitze 2 bewegt.

Das zweite Bauteil 70 der in den Figuren 12 bis 18 dargestellten zweiten Ausführungsform des zweiteiligen Clips unterscheidet sich von dem zweiten Bauteil 60 gemäß den Figuren 4 bis 11 durch die Gestaltung des unteren Teils 77 und der Stützflächen sowie der Öffnung, die von dem Schaft durchgriffen wird. Das zweite Bauteil 70 der Ausführungsform gemäß den Figuren 12 bis 18 weist Stützflächen 71, 72, 73, 74, wobei die Stützfläche 71 in die Stützfläche 72 übergeht und die Stützfläche 73 in die Stützfläche 74 übergeht. Jeder Stützfläche 71, 72, 73, 74 des zweiten Bauteils 70 ist einer der als Kopfflächen 55, 56, 57, 58 ausgebildeten Kontaktflächen des Kopfes zugewandt, wobei sich die jeweilige Kontaktfläche (Kopffläche) 55, 56, 57, 58 des Kopfes 1 auf die jeweilige Stützfläche 71, 72, 73, 74 abstützt. Ferner weist das zweite Bauteil 70 eine Öffnung 78 und ein Ausnehmung 79 auf, die der Öffnung 68 und der Ausnehmung 69 entsprechen. Während die Ausführungsform gemäß den Figuren 4 bis 11 eine ringförmige Kontaktfläche 65 aufweist, weist die zweite Ausführungsform gemäß den Figuren 12 bis 18 vier Kontaktflächen 75 auf. Die jeweiligen Kontaktflächen 75 sind an Vorsprüngen des zweiten Bauteils 70 ausgebildet. Die Vorsprünge sind brückenförmig ausgebildet und weisen zwei Schenkel auf, die sich in einer Spitze treffen, an der die dem Vorsprung zugewandten Kontaktflächen 75 des zweiten Bauteils 70 vorgesehen sind.

Der unter Bezugnahme auf die Figuren 19 und 20 dargestellte Clip unterscheidet sich insbesondere in dreierlei Hinsicht von den beiden Ausführungsformen (Figur 4 bis Figur 18). Zum einen weist das zweite Bauteil 80 keine Ausnehmung auf, die den Kopf 1 aufnimmt. Ferner ist das zweite Bauteil 80 ebenfalls aus Metall hergestellt, wie auch das erste Bauteil dieser dritten Ausführungsform. Drittens sind der obere Teil 86 und der untere Teil 87 an einer Kante 90 federnd miteinander verbunden (einem umgebogenen Abschnitt). In der in den Figuren 19 und 20 ausgefederten Position ist der untere Teil 87 beabstandet von dem oberen Teil 86. Wird der zweiteilige Clip mit seiner Spitze 2 in eine Öffnung eines Elements eingeführt und kommt das untere Teil 87 des zweiten Bauteils 80 in Anlage mit diesem Element, so wird das untere Teil 87 bei Aufbringen einer weiteren Kraft entlang der Schaftachse A-A auf das obere Teil 86 um die Kante 90 geschwenkt. Die Kontaktfläche 55 des Kopfs 1 stützt sich auf einer Stützfläche 81 des oberen Teils 86 ab. Das zweite Bauteil 80 weist eine dem Vorsprung zugewandte Kontaktfläche 85 auf.

## Patentansprüche

1. Zweiteiliger Clip zum Befestigen eines Elements an einem anderen Element, wobei der Clip ein erstes Bauteil aufweist, das
- einen Kopf (1) und
- einen sich von dem Kopf (1) entlang einer Schaftachse (A) fort erstreckenden Schaft (3) mit einer Spitze (2) aufweist,
wobei mindestens ein Vorsprung an dem Schaft (3) vorgesehen ist, der eine dem Kopf (1) zugewandte Kontaktfläche (40, 41, 42, 43) aufweist, und der Kopf (1) eine dem Vorsprung zugewandte Kontaktfläche (55, 56, 57, 58) aufweist,
wobei ein zweites Bauteil (60, 70) mit einer der Kontaktfläche (55, 56, 57, 58) des Kopfes (1) zugewandten Stützfläche (61, 62, 63, 64, 71, 72, 73, 74, 81), auf der sich die Kontaktfläche (55, 56, 57, 58) des Kopfs (1) abstützt, und einer dem Vorsprung zugewandten Kontaktfläche (65,75,85) vorgesehen ist, **dadurch gekennzeichnet, dass** das zweite Bauteil (60, 70) eine Ausnehmung (69, 79) aufweist, die den Kopf (1) aufnimmt.

2. Zweiteiliger Clip nach Anspruch 1, **dadurch gekennzeichnet, dass** das zweite Bauteil (60, 70) eine Öffnung (68, 78, 88) aufweist, durch die der Schaft (3) gesteckt ist.

3. Zweiteiliger Clip nach Anspruch 2, **dadurch gekennzeichnet, dass** das zweite Bauteil (60, 70) auf dem Schaft (3) lose zwischen einer ersten Position, bei der die Stützfläche (61, 62, 63, 64, 71, 72, 73, 74, 81) an der Kontaktfläche (55, 56, 57, 58) des Kopfes (1) anliegt, und einer zweiten Position beweglich ist, eine Erhebung oder eine Vorsprung (99) des zweiten Bauteils gegen einen Rand einer Ausnehmung des ersten Bauteils stößt und/oder bei der das zweite Bauteil (60, 70) gegen eine Erhebung des Schafts (3) stößt.

4. Zweiteiliger Clip nach einem der Ansprüche 1 bis 3, **dadurch gekennzeichnet, dass** die Ausnehmung (69, 79) so tief ist, dass wenn sich die Kontaktfläche (55, 56, 57, 58) des Kopfes auf der Stützfläche (61, 62, 63, 64, 71, 72, 73, 74) des zweiten Bauteils (60, 70) abstützt, der Kopf (1) nicht aus der Ausnehmung (69, 79) herausragt.

5. Zweiteiliger Clip nach Anspruch 1 bis 4, **dadurch gekennzeichnet, dass** die Ausnehmung (69, 79) und der Kopf (1) einen rechteckigen Querschnitt haben.

6. Zweiteiliger Clip nach einem der Ansprüche 1 bis 5, **dadurch gekennzeichnet, dass** das erste Bauteil und das zweite Bauteil (60, 70) aus unterschiedlichen Materialien bestehen.

7. Zweiteiliger Clip nach einem der Ansprüche 1 bis 6, **dadurch gekennzeichnet, dass** das erste Bauteil durch Biegen aus einem Metallzuschnitt hergestellt ist.

8. Zweiteiliger Clip nach einem der Ansprüche 1 bis 7, **dadurch gekennzeichnet, dass** die dem Vorsprung zugewandte Kontaktfläche (65, 85) des zweiten Bauteils (60) eine, insbesondere ringförmig, um die Schaftachse (A) umlaufende Kontaktfläche ist.

9. Verwendung eines zweiteiligen Clips nach einem der Ansprüche 1 bis 8 zum Befestigen eines Airbags an einem Element eines Fahrzeugs.

10. Clip zum Befestigen eines ersten Elements an einem zweiten Element, wobei der Clip
- einen Kopf (1) und eine Spitze (2) und
- eine erste Seite (4) und eine zweite Seite (5) aufweist, wobei sich die erste Seite (4) von dem Kopf (1) in Richtung auf die Spitze (2) erstreckt und die zweite Seite (5) sich von dem Kopf (1) in Richtung auf die Spitze (2) erstreckt,
- wobei sich eine erste Seitenwand (10) von der ersten Seite (4) in Richtung auf die zweite Seite (5) erstreckt,
**dadurch gekennzeichnet, dass** der Kopf (1) eine Seitenfläche (100) aufweist und eine der Spitze (2) zugewandte Kontaktfläche (55, 56, 57,58) und die Seitenfläche (100) des Kopfes über eine erste gerundete Kante (101) in die der Spitze (2) zugewandte Kontaktfläche (55, 56, 57, 58) des Kopfes übergeht und die erste Seite (3) über eine zweite gerundete Kante (102) in die erste Seitenwand (10) übergeht und die erste gerundete Kante (101) über einen Bogenabschnitt (103) in die zweite gerundete Kante (102) übergeht.

11. Clip nach einem der Ansprüche 1 bis 8, **dadurch gekennzeichnet, dass** das erste Bauteil
- eine erste Seite (4) und eine zweite Seite (5) aufweist, wobei sich die erste Seite (4) vom dem Kopf (1) in Richtung auf die Spitze (2) erstreckt und die zweite Seite (5) sich von dem Kopf (1) in Richtung auf die Spitze (2) erstreckt,
- wobei sich eine erste Seitenwand (10) von der ersten Seite (4) in Richtung auf die zweite Seite (5) erstreckt,
**wobei** der Kopf (1) eine Seitenfläche (100) aufweist und die Seitenfläche (100) des Kopfes über eine gerundete Kante (101) in die der Spitze (2) zugewandte Kontaktfläche (55, 56, 57, 58) des Kopfes (1) übergeht, und/oder
die erste Seite (3) über eine gerundete Kante (102) in die erste Seitenwand (10) übergeht.

12. Clip nach Anspruch 11, **dadurch gekennzeichnet, dass** die Seitenfläche (100) des Kopfes (1) über eine erste gerundete Kante (101) in die der Spitze (2) zugewandte Kontaktfläche (55, 56, 57, 58) des Kopfes (1) übergeht und die erste Seite (3) über eine zweite gerundete Kante (102) in die erste Seitenwand (10) übergeht und die erste gerundete Kante (101) über einen Bogenabschnitt (103) in die zweite gerundete Kante (102) übergeht.

13. Clip nach einem der Ansprüche 10 bis 12, **dadurch gekennzeichnet, dass** die der Spitze (2) zugewandte Kontaktfläche (55, 56, 57, 58) des Kopfes (1) über einen Bogenabschnitt (104) in die erste Seitenwand (10) übergeht.

14. Vorrichtung mit einem ersten Element und einem an dem ersten Element befestigten zweiten Element, wobei das erste Element ein Loch aufweist und das zweite Element mittels eines Clips nach einem der Ansprüche 1 bis 8 oder 10 bis 13 an dem ersten Element befestigt ist, wobei der Clips das Loch derart durchgreift, dass der Kopf (1) des Clips auf einer Seite des ersten Elements und die Spitze (2) des Clips auf der gegenüberliegenden Seite des Elements angeordnet ist.

## Claims

1. A two-piece clip for fastening one element to another element, wherein the clip has a first component, which has
- a head (1); and
- a shaft (3) with a tip (2) extending from the head (1) along a shaft axis (A),
wherein at least one protrusion is provided for on the shaft (3), which has a contact surface (40, 41, 42, 43) facing the head (1) and the head (1) has a contact surface (55, 56, 57, 58) facing the protrusion, wherein a second component (60, 70) is provided for, with a supporting surface (61, 62, 63, 64, 71, 72, 73, 74, 81) facing the contact surface (55, 56, 57, 58) of the head (1), on which the contact surface (55, 56, 57, 58) of the head (1) is supported, and a contact surface (65, 75, 85) facing the protrusion, **characterised in that** the second component (60, 70) has a recess (69, 79), which receives the head (1).

2. The two-piece clip in accordance with Claim 1, **characterised in that** the second component (60, 70) has an aperture (68, 78, 88), through which the shaft (3) is stuck.

3. The two-piece clip in accordance with Claim 2, **characterised in that** the second component (60, 70) on the shaft (3) can be loosely moved between a first position, in which the supporting surface (61, 62, 63, 64, 71, 72, 73, 74, 81) abuts the contact surface (55, 56, 57, 58) of the head (1), and a second position, an elevation or a protrusion (99) of the second component pushes against an edge of a recess of the first component and/or in which the second component (60, 70) pushes against an elevation of the shaft (3).

4. The two-piece clip in accordance with one of Claims 1 to 3, **characterised in that** the recess (69, 79) is sufficiently deep that, if the contact surface (55, 56, 57, 58) of the head is supported on the supporting surface (61, 62, 63, 64, 71, 72, 73, 74) of the second component (60, 70), the head (1) does not protrude from the recess (69, 79).

5. The two-piece clip in accordance with Claims 1 to 4, **characterised in that** the recess (69, 79) and the head (1) have a rectangular cross-section.

6. The two-piece clip in accordance with one of Claims 1 to 5, **characterised in that** the first component and the second component (60, 70) consist of different materials.

7. The two-piece clip in accordance with one of Claims 1 to 6, **characterised in that** the first component is produced by being bent from a metal section.

8. The two-piece clip in accordance with one of Claims 1 to 7, **characterised in that** the contact surface (65, 85) of the second component (60) facing the protrusion is a contact surface, in particular annular, that encircles the shaft axis (A).

9. Use of a two-piece clip in accordance with one of Claims 1 to 8 for attaching an airbag to an element of a vehicle.

10. The clip for fastening a first element to a second element, wherein the clip has
- a head (1) and a tip (2), and
- a first side (4) and a second side (5), wherein the first side (4) extends from the head (1) in the direction of the tip (2),
and the second side (5) extends from the head (1) in the direction of the tip (2),
- wherein a first lateral wall (10) extends from the first side (4) in the direction of the second side (5), **characterised in that**
the head (1) has a lateral surface (100) and a contact surface (55, 56, 57, 58) facing the tip (2), and
the lateral surface (100) of the head transitions, via a first rounded edge (101), into the contact surface (55, 56, 57, 58) of the head facing the tip (2), and the first side (3) transitions, via a second rounded edge (102) into the first lateral wall (10), and the first rounded edge (101) transitions, via an arc section (103), into the second rounded edge (102).

11. The clip in accordance with one of Claims 1 to 8, **characterised in that** the first component
- has a first side (4) and a second side (5), wherein the first side (4) extends from the head (1) in the direction of the tip (2) and the second side (5) extends from the head (1) in the direction of the tip (2),
- wherein a first lateral wall (10) extends from the first side (4) in the direction of the second side (5), **wherein** the head (1) has a lateral surface (100) and
the lateral surface (100) of the head transitions, via a rounded edge (101), into the contact surface (55, 56, 57, 58) of the head (1) facing the tip (2), and/or
the first side (3) transitions, via a rounded edge (102) into the first lateral wall (10).

12. The clip in accordance with Claim 11, **characterised in that** the lateral surface (100) of the head (1) transitions, via a first rounded edge (101), into the contact surface (55, 56, 57, 58) of the head (1) facing the tip (2), and the first side (3) transitions, via a second rounded edge (102), into the first lateral wall (10), and the first rounded edge (101) transitions, via an arc section (103), into the second rounded edge (102).

13. The clip in accordance with one of Claims 10 to 12, **characterised in that** the contact surface (55, 56, 57, 58) of the head (1) facing the tip (2) transitions, via an arc section (104), into the first lateral wall (10).

14. The device with a first element and a second element fastened to the first element, wherein the first element has a hole and the second element is fastened to the first element by means of a clip in accordance with one of Claims 1 to 8 or 10 to 13, wherein the clip passes through the hole in such a way that the head (1) of the clip is located on a side of the first element, and the tip (2) of the clip is to be found on the opposite side of the element.

## Revendications

1. Clip en deux parties pour attacher un élément à un autre élément, le clip présentant un premier composant qui présente
- une tête (1) et
- une tige (3) avec une pointe (2) s'étendant à partir de la tête (1) le long d'un axe de tige (A),
au moins une saillie étant prévue sur la tige (3), qui présente une surface de contact (40, 41, 42, 43) faisant face à la tête (1), et la tête (1) présente une surface de contact (55, 56, 57, 58) faisant face à la saillie,
un deuxième composant (60, 70) étant prévu avec une surface d'appui (61, 62, 63, 64, 71, 72, 73, 74, 81) faisant face à la surface de contact (55, 56, 57, 58) de la tête (1), sur laquelle s'appuie la surface de contact (55, 56, 57, 58) de la tête (1), et une surface de contact (65,75,85) tournée vers la saillie, **caractérisé en ce que** le deuxième composant (60, 70) présente un évidement (69, 79) qui reçoit la tête (1).

2. Clip en deux parties selon la revendication 1, **caractérisé en ce que** le deuxième composant (60, 70) présente une ouverture (68, 78, 88) à travers laquelle la tige (3) est insérée.

3. Clip en deux parties selon la revendication 2, **caractérisé en ce que** le deuxième composant (60, 70) est mobile de façon lâche sur la tige (3) entre une première position dans laquelle la surface d'appui (61, 62, 63, 64, 71, 72, 73, 74, 81) bute contre la surface de contact (55, 56, 57, 58) de la tête (1) et une deuxième position, une projection ou une saillie (99) du deuxième composant bute contre un bord d'un évidement du premier composant et/ou dans laquelle le deuxième composant (60, 70) bute contre une saillie de la tige (3).

4. Clip en deux parties selon l'une quelconque des revendications 1 à 3, **caractérisé en ce que** l'évidement (69, 79) est d'une profondeur telle que, lorsque la surface de contact (55, 56, 57, 58) de la tête est en appui sur la surface d'appui (61, 62, 63, 64, 71, 72, 73, 74) du deuxième composant (60, 70), la tête (1) ne fait pas saillie hors de l'évidement (69, 79).

5. Clip en deux parties selon les revendications 1 à 4, **caractérisé en ce que** l'évidement (69, 79) et la tête (1) ont une section transversale rectangulaire.

6. Clip en deux parties selon l'une quelconque des revendications 1 à 5, **caractérisé en ce que** le premier composant et le deuxième composant (60, 70) sont constitués de matériaux différents.

7. Clip en deux parties selon l'une quelconque des revendications 1 à 6, **caractérisé en ce que** le premier composant est réalisé par pliage à partir d'une découpe de métal.

8. Clip en deux parties selon l'une quelconque des revendications 1 à 7, **caractérisé en ce que** la surface de contact (65, 85) du deuxième composant (60) tournée vers la saillie est une surface de contact, notamment annulaire, s'étendant autour de l'axe de la tige (A).

9. Utilisation d'un clip en deux parties selon l'une quelconque des revendications 1 à 8 pour la fixation d'un airbag sur un élément d'un véhicule.

10. Clip pour fixer un premier élément à un deuxième élément, le clip présentant
- une tête (1) et une pointe (2) et
- un premier côté (4) et un second côté (5), le premier côté (4) s'étendant de la tête (1) vers la pointe (2)
et le second côté (5) s'étendant de la tête (1) vers la pointe (2),
- une première paroi latérale (10) s'étendant du premier côté (4) vers le second côté (5), **caractérisé en ce que**
la tête (1) présente une surface latérale (100) et une surface de contact (55, 56, 57, 58) faisant face à la pointe (2), et
la surface latérale (100) de la tête se prolonge par un premier bord arrondi (101) dans la surface de contact (55, 56, 57, 58) de la tête tournée vers la pointe (2) et le premier côté (3) se prolonge par un second bord arrondi (102) dans la première paroi latérale (10) et le premier bord arrondi (101) se prolonge par une section en arc (103) dans le second bord arrondi (102).

11. Clip selon l'une des revendications 1 à 8, **caractérisé en ce que** le premier composant
- présente un premier côté (4) et un second côté (5), le premier côté (4) s'étendant de la tête (1) vers la pointe (2) et le second côté (5) s'étendant de la tête (1) vers la pointe (2),
- une première paroi latérale (10) s'étendant du premier côté (4) vers le second côté (5), la tête (1) **présentant** une surface latérale (100), et
la surface latérale (100) de la tête se prolongeant par un bord arrondi (101) dans la surface de contact (55, 56, 57, 58) de la tête (1) tournée vers la pointe (2), et/ou
le premier côté (3) se prolongeant dans la première paroi latérale (10) par l'intermédiaire d'un bord arrondi (102).

12. Clip selon la revendication 11, **caractérisé en ce que** la surface latérale (100) de la tête (1) se prolonge par un premier bord arrondi (101) dans la surface de contact (55, 56, 57, 58) de la tête (1) tournée vers la pointe (2) et le premier côté (3) se prolonge par un second bord arrondi (102) dans la première paroi latérale (10) et le premier bord arrondi (101) se prolonge par une section en arc (103) dans le second bord arrondi (102).

13. Clip selon l'une quelconque des revendications 10 à 12, **caractérisé en ce que** la surface de contact (55, 56, 57, 58) de la tête (1) tournée vers la pointe (2) se prolonge par une section en arc (104) dans la première paroi latérale (10).

14. Dispositif avec un premier élément et un deuxième élément fixé sur le premier élément, le premier élément présentant un trou et le deuxième élément étant fixé au premier élément au moyen d'un clip selon l'une quelconque des revendications 1 à 8 ou 10 à 13, le clip pénétrant dans le trou de telle sorte que la tête (1) du clip est disposée sur un côté du premier élément et la pointe (2) du clip sur le côté opposé du premier élément.
